# EUROPÄISCHE PATENTSCHRIFT

(11) **EP 1 866 176 B1**
(45) Veröffentlichungstag und Bekanntmachung des Hinweises auf die Patenterteilung: **24.06.2009**
(21) Anmeldenummer: 06742225.3
(22) Anmeldetag: 07.04.2006
(51) Int. Cl.: B60J 7/06

(54) **VERDECKGESTELL FÜR EINEN PLANENAUFBAU**
COVERING FRAME FOR A TARPAULIN STRUCTURE
STRUCTURE DE COUVERTURE D'UNE CONSTRUCTION PLANE

(30) Priorität: 07.04.2005 DE 102005016158; 19.06.2005 DE 102005028538; 16.11.2005 DE 102005054488
(43) Veröffentlichungstag der Anmeldung: 19.12.2007
(60) Teilanmeldung: 09004706.9
(73) Patentinhaber: VBG GROUP TRUCK EQUIPMENT GmbH, 47807 Krefeld (DE)
(72) Erfinder: KEMMERLING, Karl, 42719 Solingen (DE); HEYNEN, Marion, 40593 Düsseldorf (DE); REMMEL, Lars, 42897 Remscheid (DE)
(74) Vertreter: Sparing, Rolf Klaus
(86) Internationale Anmeldenummer: PCT/DE2006/000615
(87) Internationale Veröffentlichungsnummer: WO 2006/105779

(56) Entgegenhaltungen:
- EP-A- 1 205 325
- WO-A-00/12334

## Beschreibung

Die Erfindung betrifft ein Verdeckgestell für einen Planenaufbau nach dem Oberbegriff des Anspruchs 1. Ein Verdeckgestell dieser Art ist aus der EP 1 205 325 A bekannt.

WO 00 12 334 A2 beschreibt einen Planenaufbau, bei dem eine Mehrzahl von Spriegeln entlang zweier über Rungen gegen das Fahrzeugchassis abgestützter oberer Längsträger verschieblich sind, wobei jeweils benachbarte Spriegel durch flexible Auflageelemente für die Zwangsfaltung einer Plane miteinander verbunden sind. Die Spriegel weisen endseitig als Rollenlaufwagen ausgebildete Schlitten auf, die entlang der Längsträger verfahrbar sind. Die Auflageelemente sind formschlüssig an den Schlitten befestigt und heben die Plane an, wenn die Spriegel zusammengeschoben werden. Der Rollenwagen besteht aus zwei Blechteilen, die miteinander in Eingriff stehen, wobei an dem ersten Blechteil die Rollen über Zapfen gelagert sind und das zweite Blechteil in einen hohlen Abschnitt eines Spriegelschafts eindringt, wobei jeweils zwei Auflageelemente mit ihren Enden jeweils sandwichartig zwischen den beiden Blechteilen gehalten sind. Nachteilig bei dem bekannten Verdeckgestell ist der hohe Montageaufwand, da die beiden Blechteile erst nach Einlegen der Auflageelemente zusammengesteckt werden können, sowie die aufwendige Herstellung des Schlittens.

EP 1 205 325 A1 beschreibt ein Planenaufbau, bei dem eine Mehrzahl von Spriegeln entlang seitlicher oberer Längsträger verlagerbar sind, wobei die Spriegel als Rollenlaufwagen ausgebildet sind. Jeweils an demselben Längsträger verfahrbare benachbarte Rollenlaufwagen sind paarweise über Auflageelemente verbunden, die eine Dachplane beim Zusammenschieben des Spriegel anheben. Die Auflageelemente sind gebildet durch zwei U-förmig gebogene, durchgehende Drahtabschnitte, die über eine Bügelgelenk im Bereich der Basis des U miteinander verbunden sind. An beiden Enden der Schenkel jedes U sind um 90° abgefaltete Abschnitte vorgesehen, die einander abgewandt sind und jeweils in eine Aussparung des Rollenlaufwagens insetzbar sind. Die beiden abgefaltete Abschnitte liegen im Wesentlichen auf einer Linie und definieren mit den Aussparungen, in denen sie schwenkbar sind, eine Schwenkachse des Auflageelements.

Es ist die Aufgabe der Erfindung, ein Verdeckgestell nach dem Oberbegriff des Anspruchs 1 anzugeben, das eine zuverlässige und kostengünstige Herstellung und Montage ermöglicht.

Diese Aufgabe wird bei dem eingangs genannten Verdeckgestell erfindungsgemäß mit den kennzeichnenden Merkmalen des Anspruchs 1 gelöst.

Das erfindungsgemäße Verdeckgestell ermöglicht ein sicheres und zuverlässiges Falten einer Dachplane, wobei die Faltmittel im Bereich des Schlittens nicht entlang einer Sollbiegelinie abgefaltet werden, sondern innerhalb der Führung eine beispielsweise kreisbogenförmige oder drehende Bewegung ausführen, die dazu führt, dass die Faltmittel aufgerichtet werden.

Das erfindungsgemäße Verdeckgestell lässt sich auf einfache Weise zusammenbauen, wobei die Faltmittel formschlüssig in der Führung des Schlittens einsetzbar sind und damit keine weiteren Teile zum Fixieren oder Montieren erforderlich sind. Zum Einsetzen wird ein Ende des Faltmittels oder Faltelements in Richtung der axialen Erstreckung der Führung, die im wesentlichen parallel zu der Achse des Spriegels ist, in die Führung eingesetzt. Es ist möglich, die Achse der Führung etwas winklig zu der Achse des Spriegels anzuordnen, um einen vorteilhaften Einfluss auf das Faltverhalten der Plane zu erzielen. Hierbei kann der Schlitten leicht mit den Faltmitteln oder anderen, ebenfalls zweckmäßig in die Führung einsetzbaren Teilen verbunden werden, wodurch ein einfacher und leichtgängiger Bewegungsablauf gewährleistet ist. Insbesondere ist durch das axiale Einsetzen vorteilhaft sichergestellt, dass der entsprechende Formschluss nicht in Richtung der Belastung der Faltmittel erfolgt, wodurch die entsprechenden Abmessungen ein ausreichendes Spiel für eine Schwenk- oder Drehbewegung zulassen. Zugleich wird eine Belastung der Führung in Einsetzrichtung im Betriebszustand vorteilhaft vermieden.

Vorzugsweise wird in einer der Eintrittsöffnung der Führung abgekehrten Wandung des Schlittens ein Widerlager vorgesehen, dass einen zapfen- oder kederartigen Vorsprung aufnimmt und zumindest nach oben sperrt, wodurch das Widerlager dazu beiträgt, über die Faltmittel angreifende Kräfte in den Schlitten einzuleiten. Insbesondere bei einer drehbaren Verschwenkung kann hierdurch eine gute Lagerfunktion erreicht werden.

Vorzugsweise ist an dem Schlitten für ein faltmittel jeweils ein Auflagefläche vorgesehen, die als Anschlag für einen entsprechend ausgeformten Abschnitt des Faltmittels dient, wobei der Anschlag die Drehung des Faltmittels in der Führung jeweils begrenzt, insbesondere vorzugsweise verhindert, dass beim Zusammenschieben des Gestells die zwischen zwei benachbarten Spriegeln ausgezogenen, von der Plane beschwerten Faltmittel statt sich aufzurichten nach unten klappen. Ferner ist zweckmäßigerweise ein weiterer Anschlag vorgesehen, der ein zu weites Ausschwenken und damit ein Überschlagen des Faltmittels verhindert, wobei dieser Anschlag vorteilhaft ein Aufrichten über 90° hinaus noch ermöglicht.

Zweckmäßigerweise weisen die Faltmittel wenigstens eine Aussparung auf, die es ermöglicht, an den die Führung definierenden Bauteilen des Schlittens vorbei zu schwenken. Insbesondere dann, wenn die Führung eine oder mehrere Klauen oder klauenartige Aufnahmen aufweist, die einen als Zapfen ausgebildeten Abschnitt des Faltmittels aufnimmt, sind die für die Klauen benötigten Bereiche als Aussparungen in dem Faltmittel vorgesehen, während das Faltmittel über Stege mit dem Zapfen verbunden ist. Auf diese Weise wird ein stabiles und belastbares Gelenk endseitig an dem Faltmittel geschaffen. Eine klauenartige Aufnahme zeichnet sich vorteilhaft dadurch aus, dass sie eine Durchbrechung aufweist, die ein Hindurchtreten einer gegenüber dem Zapfen schmaleren Partie, hier insbesondere der Stege, des Faltmittels ermöglicht, ohne dass durch Zugbeanspruchung der in der Art eines Keders einstückig mit dem übrigen Faltmittel gebildete Zapfen durch die Durchbrechung herausgerissen werden kann. Der als Zapfen ausgebildete Abschnitt des Faltmittels ermöglicht dann eine Schwenkbewegung um die Achse des Zapfens. Hierbei sind die Dicke des Faltmittels und der Spalt der Durchbrechung der Klaue aufeinander abgestimmt. Ebenso sind der Außendurchmesser des Zapfens und die zylindrische Aufnahme in der wenigstens einen Klaue aufeinander abgestimmt. Um eine gute Führung der Faltmittel zu erreichen, umfasst die Führung vorteilhaft zwei miteinander ausgefluchtete Klauen, wobei das Faltmittel zwischen den beiden Klauen einen Steg aufweist.

An dem Zapfen ist vorzugsweise wenigstens eine Abstellung in der Art einer Ausrücknase vorgesehen, die beim Einsetzen des Zapfens zusammengedrückt wird und dann zurück in eine über den Umfang des Zapfens vorstehende Lage federt. Die Ausrücknase gelangt dabei in Anlage gegen die seitliche Begrenzung einer Klaue und verhindert so formschlüssig das Herausrutschen des Faltmittels. Hierdurch wird eine nahezu spielfreie Lagerung des Zapfens erreicht, bei der die Ausrücknase durch die übliche Betätigung der Dachplane praktisch nicht beansprucht wird. Es ist auch möglich, die Abstellung in einen Hohlraum der klauenartigen Aufnahme vorzusehen, wo sie schwerer zugänglich ist.

Alternativ ist die Führung in dem Schlitten gekrümmt ausgebildet, und ein Faltmittel weist einen gekrümmten Endbereich auf, der an die Form der Führung des Schlittens zweckmäßigerweise angepasst ist und eine kederartige Verdickung aufweist, die ein Herausverlagern aus der Führung verhindert. Entsprechend ist die in Verlängerung ihrer Krümmung offene Führung dort vorteilhaft mit einer Einschnürung ausgestattet, deren Abmessungen ein Durchtreten des gekrümmten Endbereichs des Faltmittels zulassen, nicht aber des Keders.

Zum Einsetzen des gekrümmten Endbereichs des Faltmittels wird dieses axial, also in Richtung des Spriegelschafts, in die zur Innenseite offene gekrümmte Führung eingesetzt, wo die Abmessungen der Führung ausreichen, auch den Keder einzusetzen. Anschließend wird der Spriegelschaft auf einen entsprechenden Abschnitt des Schlittens aufgesteckt, wodurch zugleich die Öffnung zum Einsetzen des Endbereichs des Faltmittels verschlossen und ein versehentliches Herausgleiten verhindert ist.

Zweckmäßigerweise ist dieser Schlitten mit zwei gegenüberliegenden gekrümmten Führungen ausgestattet, so dass sich beiderseits jeweils ein Faltmittel anschließen kann. Hierbei sind die Führungen zweckmäßigerweise symmetrisch ausgestattet, es ist aber auch möglich, die Führungen asymmetrisch auszustatten, um unterschiedliche Momente auf die eine und die andere Seite des Faltmittels vorzusehen.

Vorzugsweise weist die gekrümmte Führung einen Kreisbogenabschnitt auf, der mit konstantem Radius um eine Mittenachse verläuft, so dass der in die Führung eingesetzte Endbereich eine Rotationsbewegung um diese Mittenachse ausführt. Hierbei ist die Rotationsbewegung zweckmäßigerweise derart eingestellt, dass die Faltmittel jeweils einen geringen Winkel zur Horizontalen einnehmen, wenn das Verdeck geschlossen ist und die Spriegel den maximalen Abstand zueinander einnehmen, während die Faltmittel bei zusammengeschobenen Spriegeln nach oben zur Bildung eines Dreiecks oder eines Trapezes aufgerichtet sind. Ein weiterer Vorteil, der hieraus resultiert, ist die Tatsache, dass bei Zuziehen des geöffneten Verdecks, bei dem in der Regel die Zugkraft über den endseitigen Portalbalken eingeleitet und zunächst das erste Faltmittel gespreizt wird, dann das Faltmittel zwischen dem ersten und dem zweiten Spriegel, dann das Faltmittel zwischen dem zweiten und dem dritten Spriegel usw. die übertragenen Kräfte nicht speziell die Gelenke der ersten Faltmittel und Schlitten besonders beanspruchen, sondern durch die Übertragung der Kräfte in der Fläche eine relativ gleichmäßige Übertragung der Kräfte erfolgt, bei der die Gefahr, dass der Endbereich eines Faltmittels aus der Führung herausgerissen wird, besonders reduziert ist. Die Führung umfasst zweckmäßigerweise mehrere Kreisbogenabschnitte, die zum Teil mit unterschiedlichen Radien ausgestattet sind, wobei zu beachten ist, dass die Mittenachse nicht zweckmäßigerweise parallel zur Spriegelachse verlaufen muss, vielmehr durch einen geringen Winkel sichergestellt sein kann, dass bei Anheben des Faltmittels dieses zugleich ein stückweit nach außen verlagert wird, wodurch die Plane zusätzlich vorteilhaft gespannt wird.

In den Führungen sind zweckmäßigerweise Rastmittel vorgesehen, die ein Verrutschen, nicht aber das Schwenken der Faltmittel sicher stellen. Hierzu kommt zum Beispiel eine Keilfläche im oberen Ende der Führung in Betracht, ferner eine überwindbare, in Verriegelungsstellung vorgespannte Abstellung.

Der Schlitten ist zweckmäßigerweise aus Kunststoff, beispielsweise im Spritzgussverfahren, hergestellt, wodurch die Führung mit einfachen Mitteln, beispielsweise mit entfernbaren Kernen, geformt werden kann. Hierdurch lassen sich auch die Rastmittel einfach einstückig mit dem Schlitten herstellen. Hierneben können Versteifungsrippen, mit denen Material eingespart wird, je nach Bedarf vorgesehen werden.

Zweckmäßigerweise sind an dem Schlitten Rollen vorgesehen, mit denen sich der Schlitten auf entsprechenden Bahnen des Längsträgers abwälzen kann, wobei die horizontal gelagerten Rollen als Tragrollen und die vertikal gelagerten Rollen als Führungsrollen vorgesehen sind. Hierbei wird die Gewichtskraft der Spriegel im wesentlichen über die horizontalen Tragrollen eingeleitet. Es ist möglich, die Rollen mittels zentrischer Öffnungen auf einstückig mit dem Schlitten ausgebildete Kunststoffzapfen aufzupressen, so dass eine aufwendige Vernietung entfällt. Alternativ können anstelle von Rollen auch starre Tragelemente vorgesehen sein, die einstückig mit dem Schlitten ausgebildet sind und die dann auf den Laufbahnen gleiten. Zweckmässigerweise sind für jeden Schlitten zwei Tragrollen und mindestens eine Führungsrolle vorgesehen.

Besonders vorteilhaft ist das Vorsehen eines Fortsatzes, der gemäß einer bevorzugten ersten Ausgestaltung über die nach außen weisende Stirnseite der Tragrollen oder der Tragelemente vorsteht, und der vorzugsweise einstückig mit dem Schlitten ausgebildet ist. Hierbei dient der Fortsatz als Kippsicherung, die es verhindert, dass der Schlitten aus der Führung der Längsträger herausgehebelt wird. Die untere Kante des Fortsatzes ist dabei derart ausgestaltet, dass sie über dem unteren Rand der Tragelemente oder Tragrollen übersteht, so dass es nicht zu einer permanenten Berührung und der damit einhergehenden Geräuschentwicklung kommt. Sollte jedoch eine der Tragrollen brechen, dient der Fortsatz zugleich als Hilfstrage-Element, welches dann aufsitzt und verhindert, dass der Schlitten insgesamt zerstört wird und eine Notfunktion des Spriegels erhalten bleibt. Zweckmäßigerweise reicht der Fortsatz in einen entsprechenden C-förmigen Profilabschnitt des Längsträgers hinein, dessen Grund geringfügig gegenüber der Lauffläche für die Tragrollen erhöht ist, und dessen oberer Schenkel ein vertikales Ausheben des Schlittens verhindert, so dass die Tragrollen auf einer ersten Bahn des Längsträgers abrollen und der Fortsatz in einer zur ersten Bahn benachbarten C-förmigen Kammer eindringt. Der Fortsatz weist zur Vermeidung von Belastungsspitzen vorzugsweise eine horizontale obere Kante auf.

Zweckmäßigerweise ist der Fortsatz mittig zwischen den beiden Tragrollen angeordnet, so dass auch ein Verschwenken des Schlittens nur in geringem Maße möglich ist.

Eine besonders vorteilhafte kompakte, kleinbauende und zugleich zuverlässig abrollende Anordnung des Schlittens wird dadurch erreicht, dass die obere Stirnseite der Führungsrollen niedriger liegt als der obere Rand der Tragrollen. Hierdurch wird zum einen die Gefahr des Kippens des Schlittens deutlich herabgesetzt. Ferner kann das Längsträgerprofil, an dem der Schlitten angeordnet ist, kompakter und damit leichtgewichtiger gestaltet werden. Zweckmäßigerweise sind die Führungsrollen und die Tragrollen gleich groß bemessen, so dass unter Reduzierung der Teilevielfalt jede Rolle universell als Trag- oder als Führungsrolle einsetzbar ist. Zweckmäßigerweise, ist auch die untere Stirnseite der Führungsrolle in einer Ebene angeordnet, die oberhalb der Drehachse der Tragrollen liegt. Dies bedeutet, dass im Ergebnis die Führungsrollen nicht in einer oberhalb der Tragrollen angeordneten Ebene vorzusehen sind, so dass die Bauhöhe des Schlittens insgesamt kompakter wird.

Gemäß einer anderen, bevorzugten Ausgestaltung weist der Schlitten einen Lagerabschnitt auf, der in eine nach oben offene Kammer des Längsträgers vorsteht, wobei an dem Lagerabschnitt sowohl wenigstens eine Tragrolle als auch wenigsten eine Führungsrolle angeordnet sind. Hierdurch wird zum einen eine sehr kompakte Ausgestaltung des Schlittens geschaffen, da dieser die beiden Rollen im wesentlichen als Kreuz anordnet, so dass der für zwei getrennte Lagerungen erforderliche Bauraum eingespart wird. Ferner ist es möglich, den empfindlichen Übergangsbereich des Schlittens zwischen Längsträger und Führungen dicker und damit widerstandsfähiger auszubilden.

Vorzugsweise sind die Rollen in dem Lagerabschnitt beidseitig gelagert, wodurch die Lebensdauer der Lager erheblich verlängert wird, ferner können etwaige Stöße besser aufgenommen werden. Hierbei weist zweckmäßigerweise der Lagerabschnitt entsprechende Öffnungen in beiderseitigen Rippen für das Einsetzen von Lagerzapfen für die Rollen auf. Durch das beiderseitige Lagern zumindest der Tragrollen wird ein besonders stabiler und langlebiger Schlitten geschaffen. Die beiden Rippen sind hierbei vorteilhaft über eine Verbindung in deren Mitte gegeneinander stabilisiert, wobei in dieser Verbindung auch die Führungsrolle vorteilhaft gelagert werden kann.

Die Faltmittel weisen vorteilhaft ein mittleres Hubglied auf, welches über Sollbiegelinien mit äußeren Faltmittelabschnitten verbunden ist, so dass beim Anheben der Faltmittel durch Verschwenken der an den äußeren Faltmittelabschnitten vorgesehenen gekrümmten Endbereiche oder um die Achse des Zapfens das Hubglied im wesentlichen horizontal und in Anlage gegen die Dachplane verbleibt und so beim Zusammenschieben der Spriegel eine Anlagefläche zum Anheben der Dachplane bildet. Das Hubglied ist zweckmäßigerweise einstückig mit dem Faltmittel ausgebildet, kann aber auch durch ein hierauf aufgestecktes Element gebildet sein. Das mittlere Hubglied ist hierbei zweckmäßig oberhalb der Längsträger ablegbar, so dass bei geschlossener Dachplane und damit maximal voneinander entfernten Spriegeln das Faltmittel gleichwohl eine leicht trapezförmige Gestalt aufweist, die beim Einleiten der Faltbewegung ein Moment ermöglicht und daher eine einfache Faltbewegung einleiten können. Zugleich bildet das mittlere Hubglied einen Anschlag gegen den Längsträger, so dass selbst bei ruckartiger Bewegung ein zu starkes Reißen an dem Faltmittel im Bereich der gekrümmten Führung oder an der Dachplane verhindert ist.

Zweckmäßigerweise ist die Führung auf einer Höhe unterhalb des oberen Randes des Längsträgers angeordnet, um die geneigte Ausgangsstellung des Faltmittels zuzulassen.

Eine besonders gute Beweglichkeit wird erreicht, wenn der gekrümmte Endbereich des Faltmittels innerhalb der gekrümmten Führung zu einer faktischen Verlängerung des Faltmittels beim aufgestellten Zustand führt, so dass es zu einer besonders zuverlässigen Faltung der Plane kommt.

Das Verdeckgestell wird zweckmäßigerweise für einen Planenaufbau eingesetzt, wie er zweckmäßigerweise bei Nutzfahrzeugen oder Containern vorgesehen ist, wobei die Längsträger aus mehreren Abschnitten bestehen können, die hintereinander angeordnet sind und die über Rungen gegen eine Ladeplattform des Aufbaus abgestützt sind.

Ein Schlitten insbesondere zum Einsatz in einem vorstehend dargestellten Verdeckgestell, der endseitig an einen Spriegelschaft ansetzbar ist und an dem horizontale Tragelemente, insbesondere horizontal gelagerte Tragrollen, und vertikale Führungselemente, insbesondere vertikal gelagerte Führungsrollen, vorgesehen sind zeichnet sich dadurch aus, dass ein Fortsatz vorgesehen ist, der als Kippsicherung über die nach außen weisende Stirnseite der Tragelemente vorsteht. Der Fortsatz kann neben den Tragelemente, vorzugsweise zwischen benachbarten Tragelementen angeordnet sein, kann aber auch als Verlängerung der Tragelemente ausgebildet sein. Hierdurch wird vorteilhaft erreicht, dass die Tragelemente nicht selbst unter einem Profilschenkel verfahren werden und mit der damit einhergehenden Beschädigungsgefahr als Kippsicherung eingesetzt werden müssen.

Ein Schlitten, insbesondere zum Einsatz in einem vorstehend dargestellten Verdeckgestell, der endseitig an einen Spriegelschaft ansetzbar ist, an dem horizontale Tragrollen und vertikale Führungsrollen vorgesehen sind zeichnet sich dadurch aus, dass die obere Stirnseite der Führungsrollen niedriger liegt als der obere Rand der Tragrollen. Dadurch ist es vorteilhaft nicht erforderlich, eine eigene Ebene für die Führungsrollen vorzusehen, so dass Schlitten und Längsträger in kompakter Bauweise ausgeführt werden können. Zweckmäßigerweise ist die untere Stirnseite der Führungsrollen in einer Ebene oberhalb der Drehachse der Tragrollen vorgesehen, wodurch eine geringe Bauhöhe des Längsträgers erzielbar ist und zugleich die örtliche Verdickung im Bereich des Schlittens zur Lagerung der Rollen klein gehalten ist.

Ein Schlitten, insbesondere zum Einsatz in einem vorstehend dargestellten Verdeckgestell, der endseitig an einen Spriegelschaft ansetzbar ist, an dem horizontale Tragrollen und vertikale Führungsrollen vorgesehen sind zeichnet sich dadurch aus, dass die Faltmittel in eine Führung des Schlittens entlang der Achse der Führung einsetzbar sind. Hierbei liegt die Achse der Führung im wesentlichen in einer zumindest weitgehend horizontalen Ebene und annähernd senkrecht zur Längsrichtung eines Längsträgers, entlang dessen der Schlitten verlagerbar sein soll. Es ist möglich, eine gekrümmte Führung vorzusehen, bei der die Krümmung dann nicht in der Achse der Führung verläuft, sondern in der zu der Achse der Führung normalen Ebene, in der Faltmittel zum Aufrichten eine Schwenkbewegung entlang der gekrümmten Führung ausführen können. Die Führung ist zweckmäßigerweise in einem Bereich innerhalb der gegenüberliegenden Längsträger und damit unterhalb, zumindest aber nicht oberhalb der Rollen vorgesehen. Bei einer Führung zur Lagerung eines Zapfens liegt die Achse der Führung nahe der Achse der Tragrollen und ist vorzugsweise zu dieser parallel, um störende Momente zu vermeiden.

Ein Längsträgerprofil, insbesondere für die Verwendung in einem vorgenannten Verdeckgestell, insbesondere um vorzugsweise einen vorgenannten Schlitten in Längsrichtung verlagerbar anzuordnen, umfasst einen ersten, im wesentlichen horizontal angeordneten Schenkel und einen weiteren, beispielsweise vertikal nach unten angeordneten Schenkel, und zeichnet sich dadurch aus, dass der erste Schenkel eine nach innen weisende Gleitbahn für ein Tragelement des Schlittens aufweist, und dass neben der Gleitbahn ein C-förmiger, zur Gleitbahn offener Abschnitt vorgesehen ist. Die Innenseite ist hierbei die in Richtung auf die Ladefläche gerichtete Seite des Längsträgers. Das erfindungsgemäße Längsträgerprofil ermöglicht es vorteilhaft, den Bereich der Tragelemente, die vorzugsweise als Tragrollen ausgebildet sind, nicht zu überbauen, so dass die Gleitbahn in einfacher Weise für die Reinigung zugänglich ist und darüber hinaus die Tragelemente, insbesondere gelenkig gelagerte Tragrollen, nicht gegen einen oberen Schenkel des Längsträgerprofils anschlagen. Ferner wird hierdurch eine geringere Bauhöhe der Einheit Schlitten/Längsträger erreicht, wodurch die Nutzhöhe des Aufbaus vergrößert wird. In den C-förmigen Profilabschnitt kann eine Kippsperre des Schlittens eingreifen, so dass vorteilhaft die Rollbewegung und die Kippsicherung des Schlittens an dem Längsträgerprofil entkoppelt sind.

Vorzugsweise ist der Boden des C-förmigen Profilabschnitts gegenüber der Gleitbahn erhöht ausgebildet, so dass sich zwischen Gleitbahn und Boden des C-förmigen Profilabschnitts eine kleine Stufe von ca. einem Millimeter ergibt.

Auf der der Gleitbahn abgekehrten Seite des C-förmigen Profilabschnitts ist vorteilhaft eine nach oben offene Kammer gebildet, in der ein vertikales Führungselement, vorzugsweise Führungsrollen, einsetzbar ist. Die mittlere Strebe des C-förmigen Profilabschnitts begrenzt somit gleichzeitig den C-förmigen Profilabschnitt auf der nach außen weisenden Seite und die nach oben offene Kammer auf der nach innen (also zur Aufbaumitte) weisenden Seite, so dass mit geringem Material- und damit Gewichtsaufwand für Trag- und Führungselemente Aufnahmen an dem Längsträgerprofil geschaffen sind.

Ein besonders kompaktes Längsträgerprofil wird dadurch geschaffen, dass der Grund der nach oben offenen Kammer unterhalb einer Halbierenden des C-förmigen Profilabschnitts liegt. Hierdurch können die Führungs- und Tragelemente kompakt und nahe beieinander angeordnet werden, und es ist nicht erforderlich, eine Kammer vollständig oberhalb des C-förmigen Profilabschnitts vorzusehen. Weiterhin ist vorteilhaft vorgesehen, dass der untere Rand des oberen, im wesentlichen horizontalen Schenkels des C-förmigen Profilabschnitts oberhalb einer die nach oben offene Kammer halbierenden Achse liegt.

Zweckmäßigerweise ist die obere Begrenzung des ersten Schenkels zwischen der nach oben offenen Kammer und dem äußeren Rand nach unten abfallend ausgebildet, so dass weiteres Material und damit Gewicht eingespart wird. Darüber hinaus ist es möglich, den Schlitten an dieser Stelle leicht konisch auszubilden, was dessen Herstellung im Spritzgussverfahren vereinfacht. Unterhalb des nach unten abfallenden Bereichs ist zweckmäßigerweise wenigstens eine geschlossene Hohlkammer gebildet, um die Herstellung im Strangpressverfahren besser zu ermöglichen und darüber hinaus Gewicht und damit Material einzusparen.

Zweckmäßigerweise ist auf der nach außen weisenden Seite des Längsträgerprofils eine weitere, C-förmige und nach außen weisende, offene Nut vorgesehen, in die eine Abfaltung des Schlittens eingreifen kann.

Zweckmäßigerweise schließt sich an den ersten Schenkel des Längsträgerprofils ein weiterer Schenkel des Längsträgerprofils an, der die weitere Funktionalität des Längsträgerprofils wahrt. So ist beispielsweise das Vorsehen einer Aufnahme für ein Tragglied einer Seitenplane oder einer Anlagefläche für eine Runge, Mittel zum Befestigen eines Zollverschlusses oder dergleichen vorzusehen, wobei der erste Schenkel dieser Profile zweckmäßigerweise derart ausgestaltet ist, dass dieselben Schlitten hierauf verlagerbar sind.

Eine andere bevorzugte Ausgestaltung eines Längsträgerprofils weist im wesentlichen nur eine nach oben offene Kammer auf, in die ein Lagerabschnitt eines Schlittens einsetzbar ist, an dem sowohl Tragrollen als auch Führungsrollen vorgesehen sind. Durch die Anordnung von Tragrollen und Führungsrollen in der Art der Schenkel eines "+"-Zeichens wird das erforderliche Spiel reduziert. Durch eine beiderseitige Lagerung der Rollen wird die Stabilität und damit die Lebensdauer des Schlittens erhöht

Weitere vorteilhafte Merkmale der Erfindung ergeben sich aus der nachfolgenden Beschreibungen sowie aus den abhängigen Ansprüchen.

Die Erfindung wird nachstehend unter Bezugnahme auf die anliegenden Zeichnungen anhand von bevorzugten Ausführungsbeispielen näher erläutert.
- Fig. 1: zeigt eine perspektivische Ansicht eines erfindungsgemäßen Verdeckgestells für einen Planenaufbau.
- Fig. 2: zeigt eine Explosionsdarstellung der oberen Teile des Verdeckgestells aus Fig. 1.
- Fig. 3: zeigt eine Zusammenbaudarstellung der oberen Teile des Verdeckgestells aus Fig. 1.
- Fig. 4: zeigt in einem Ausschnitts aus Fig. 3 eine perspektivische Ansicht eines Schlittens.
- Fig. 5: zeigt in Seitenansicht in Fahrtrichtung den Teil eines Spriegels aus Fig. 1 bis 3 mit Schlitten, der auf einem Längsträger angeordnet ist.
- Fig. 6: zeigt eine vergrößerte Einzelheit des Schlittens aus Fig. 4 und 5.
- Fig. 7: zeigt eine vergrößerte Einzelheit des eines Faltelements eines Verdeckgestells Fig. 1 bis 3.
- Fig. 8: zeigt eine perspektivische Ansicht von unten des Schlittens aus Fig. 4 und 5.
- Fig. 9: zeigt eine perspektivische Ansicht eines Faltelements aus einem Verdeckgestell gemäß Fig. 1 bis 3.
- Fig. 10: zeigt eine Seitenansicht des Faltelements aus Fig. 9, quer zur Fahrtrichtung von der Hauptachse des Verdeckgestells aus betrachtet.
- Fig. 11: zeigt eine Draufsicht auf das Faltelements aus Fig. 9 und 10.
- Fig. 12: zeigt eine perspektivische Ansicht eines bevorzugten Ausführungsbeispiel eines erfindungsgemäßen Längsträgerprofils.
- Fig. 13: zeigt einen Querschnitt durch das Längsträgerprofil aus Fig. 12.
- Fig. 14: zeigt einen Querschnitt durch einen horizontalen Schenkel des Längsträgerprofils aus Fig. 12 und 13.
- Fig. 15: zeigt eine perspektivisch Ansicht von oben einer alternativen Zusammenbaudarstellung der oberen Teile des Verdeckgestells aus Fig. 1.
- Fig. 16: zeigt eine perspektivisch Ansicht von unten der oberen Teile des Verdeckgestells aus Fig. 15.
- Fig. 17: zeigt in Seitenansicht in Fahrtrichtung den Teil eines Spriegels aus Fig. 1 und 15 mit Schlitten, der auf einem Längsträger angeordnet ist.
- Fig. 18: zeigt eine perspektivische Ansicht von unten des Schlittens aus Fig. 15 bis 17.
- Fig. 19: zeigt den Schlitten aus Fig. 18 in perspektivischer Ansicht von oben.
- Fig. 20: zeigt eine perspektivisch Ansicht eines Ausschnitts einer weiteren Ausführungsform der oberen Teile des Verdeckgestells aus Fig. 1.
- Fig. 21: zeigt in einem Ausschnitts aus Fig. 20 eine perspektivische Ansicht eines Schlittens.
- Fig. 22: zeigt in Seitenansicht in Fahrtrichtung den Teil eines Spriegels aus Fig. 20 und 21 mit Schlitten, der auf einem Längsträger angeordnet ist.
- Fig. 23: zeigt eine perspektivische Ansicht von oben des Schlittens aus Fig. 20 bis 22.
- Fig. 24: zeigt eine perspektivische Ansicht von unten des Schlittens aus Fig. 20 bis 22.
- Fig. 25: zeigt eine Seitenansicht des Schlittens aus Fig. 20 bis 22 aus Richtung des Spriegelschaftes.
- Fig. 26: zeigt eine perspektivische Ansicht eines Faltelements aus einem Verdeckgestell gemäß Fig. 20 und 21.
- Fig. 27: zeigt eine vergrößerte Einzelheit des eines Faftelements eines Verdeckgestells Fig. 20 und 21.
- Fig. 28: zeigt eine perspektivische Ansicht eines vergrösserten Ausschnitts des Faftelements gemäß Fig. 26.
- Fig. 29: zeigt eine Draufsicht eines vergrösserten Ausschnitts des Faltelements gemäß Fig. 26 von unten.
- Fig. 30: zeigt eine Seitenansicht des Faltelements aus Fig. 26, quer zur Fahrtrichtung von der Hauptachse des Verdeckgesteils aus betrachtet.
- Fig. 31: zeigt eine Draufsicht auf das Faltelements aus Fig. 26.
- Fig.32: zeigt eine perspektivische Ansicht eines anderen bevorzugten Ausführungsbeispiel eines Längsträgerprofils.
- Fig. 33: zeigt einen Querschnitt durch das Längsträgerprofil aus Fig. 32.
- Fig. 34: zeigt einen Querschnitt durch einen horizontalen Schenkel des Längsträgerprofils aus Fig. 32 und 33.

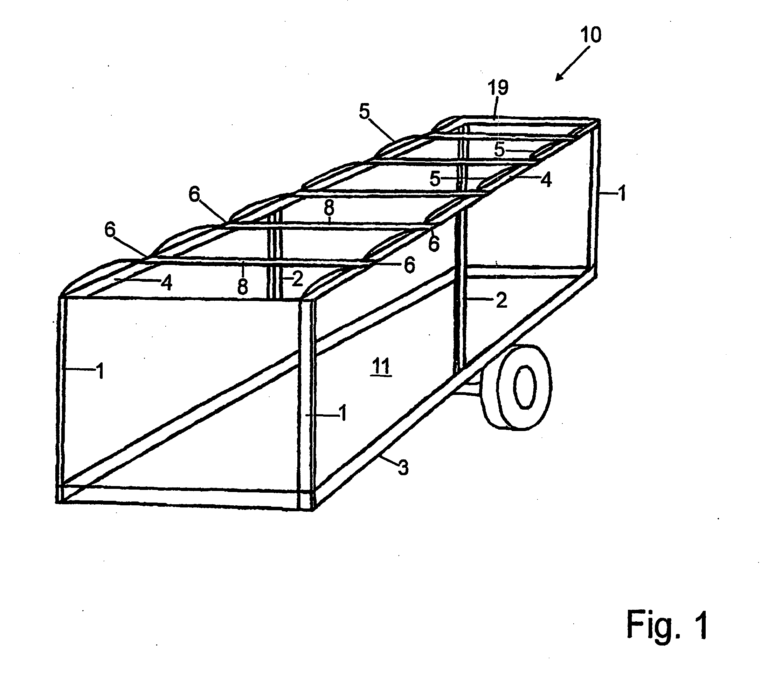

Der in Fig. 1 schematisch dargestellte Planenaufbau, bei dem es sich vorliegend um einen Sattelauflieger handelt, umfasst ein insgesamt mit 10 bezeichnetes Verdeckgestell, welches ein Fahrzeugchassis 3 überbaut, wobei eine Ladeplattform 11 Eckrungen 1 und Mittelrungen 2 abstützt, die zwei seitliche Längsträger 4, die in Fahrzeugrichtung verlaufen, abstützen. Der Längsträger 4 besteht aus zwei Teilen, die sich jeweils bis zur Mitte erstrecken und die sich auf einer gemeinsamen Mittelrunge 2 abstützen. Aus Gründen der Übersichtlichkeit sind nur zwei Mittelrungen 2 dargestellt, es versteht sich, dass mehrere Mittelrungen 2 vorgesehen sein können.

Zwischen den parallelen Längsträgern 4 erstrecken sich quer zur Fahrtrichtung verlaufende Spriegel 8, die endseitig jeweils einen Schlitten 6 aufweisen und die insgesamt eine mit 5 bezeichnete Dachplane abstützen. Die Spriegel 8 sind über die Spriegel 6 an entsprechenden Laufbahnen der Längsträger 4 in Fahrtrichtung verschieblich, wobei hierzu die Plane 5 zwischen benachbarten Spriegeln nach oben zwangsgefaltet wird. Zum Verriegeln der Dachplane ist im hinteren Bereich des Verdeckgestells 10 ein Portalelement 19 vorgesehen.

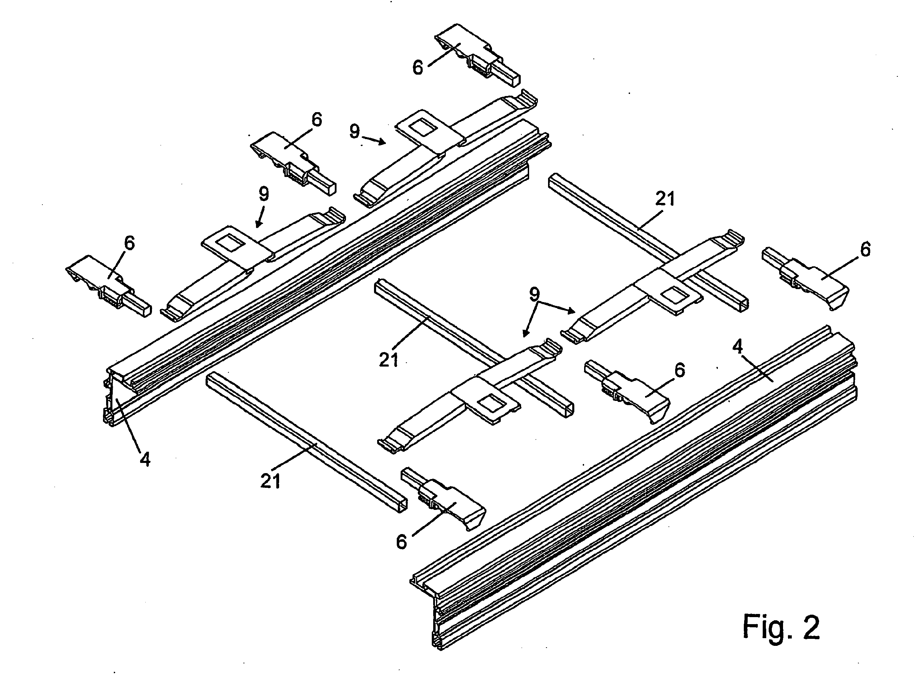

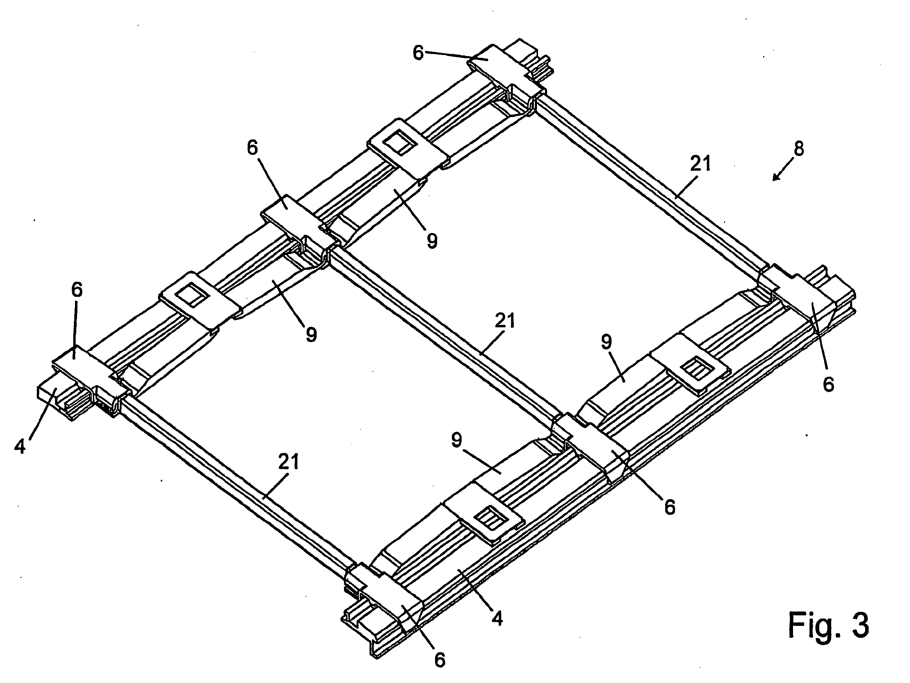

In Fig. 2 ist in einer explodierten Darstellung der obere Bereich des Verdeckgestells 10 dargestellt, wobei die Einzelheiten der Spriegel 8 näher dargestellt sind. Die Spriegel 8 umfassen einen als Vierkanthohlprofil ausgebildeten Spriegelschaft 21, auf den endseitig die als Kunststoffformteil hergestellten Schlitten 6 aufsteckbar sind. Zwischen jeweils benachbarten, auf dem selben Längsträger 4 laufenden Schlitten 6 sind Faltmittel 9 vorgesehen, die in Fig. 2 in einer im wesentlichen ausgestreckten Lage, die der Lage bei geschlossener Dachplane entspricht, dargestellt sind. In Fig. 3 sind die Spriegel 8 zusammengebaut, und die Faltmittel 9 in gekrümmten Führungen des Schlittens 6, die nachstehend näher erläutert werden, eingesetzt. Man erkennt, dass wenn der Spriegelschaft 21 vollständig zusammengeschoben wird, die gekrümmte Führung in dem Schlitten 6, die zur Innenseite hin offen ist, derart verschlossen ist, dass die Faltmittel 9 nicht entweichen können. Man erkennt ferner, dass ein Schenkel des Längsträgers 4 nicht dargestellt ist, und dass nur derjenige Teil des Längsträgers dargestellt ist, der für die Verlagerbarkeit der Schlitten 6 erforderlich ist.

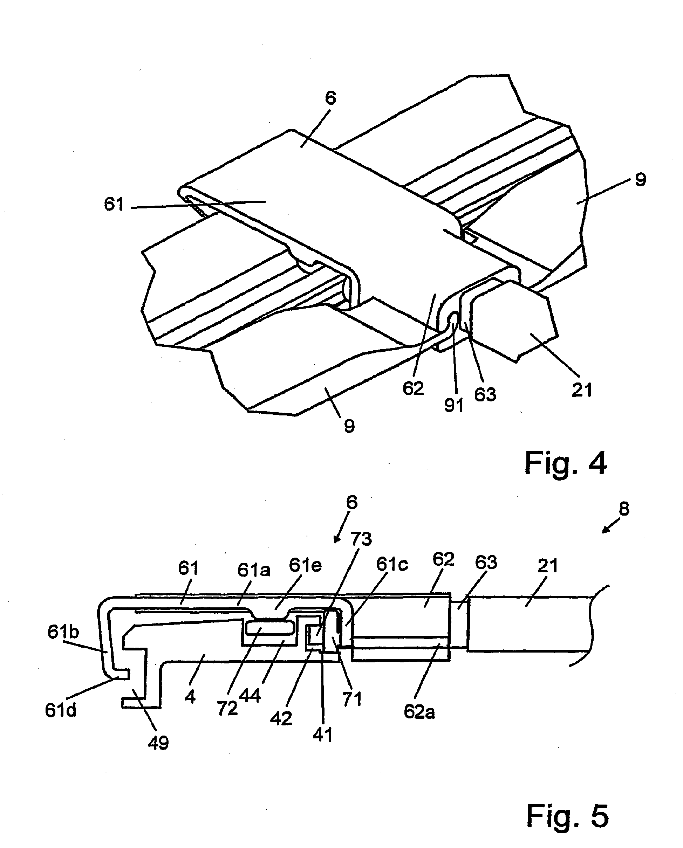

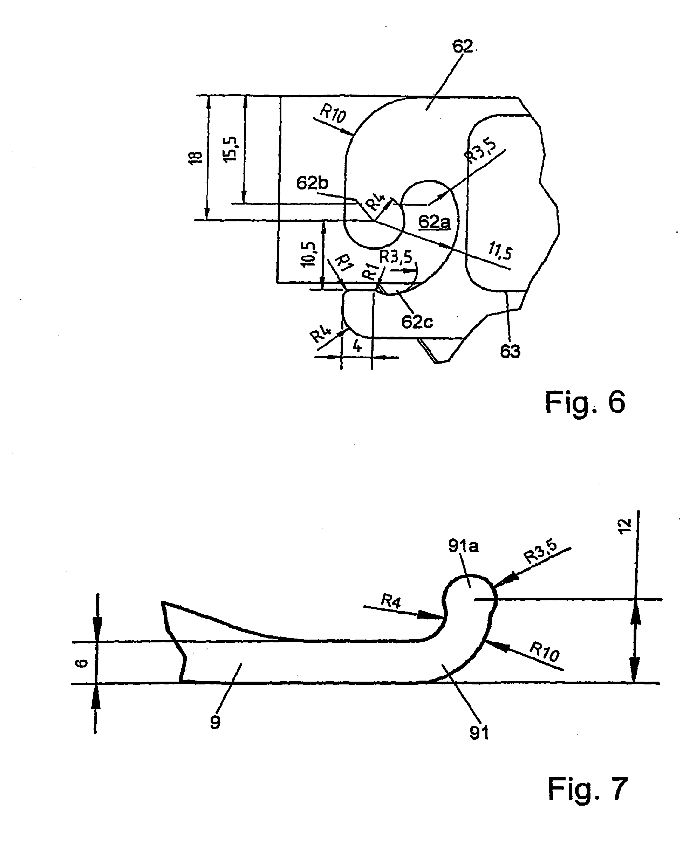

In Fig. 4 erkennt man in größeren Einzelheiten die Art und Weise, in der die Faltmittel 9 und der Schlitten 6 zusammenwirken. Der Schlitten 6 umfasst einen Tragbereich 61, der im wesentlichen den Längsträger 4 umgibt, einen sich an den Tragbereich 61 nach innen hin anschließenden Führungsbereich 62, an dem die Faltmittel 9 angeordnet sind, und einen sich hieran anschließenden Steckbereich 63, der in den Spriegelschaft 21 einführbar ist und der im wesentlichen eine Vierkantgestalt aufweist. Die Abschnitte 61, 62 und 63 sind einstückig aus Kunststoff im Spritzgussverfahren hergestellt. Man erkennt, dass im Führungsbereich 62 auf beiden Seiten in dem Material des Schlittens 6 eine gekrümmte Führung 62a ausgebildet ist, die in Fig. 6 in weiteren Einzelheiten näher dargestellt ist. Die gekrümmte Führung 62a ist über einen durchgehenden Bereich innerhalb des Führungsabschnitts 62 gebildet und auf der zur Fahrzeugmitte hinweisenden Seite offen ausgebildet, um das Einsetzen eines gekrümmten Endabschnittes 91 des Faltmittels 9 zu ermöglichen. Man erkennt, dass die Begrenzungen der gekrümmten Führung 62a im wesentlichen aus Kreisbogenabschnitten besteht, die mit den entsprechenden Radien in Fig. 6 dargestellt sind. Damit erfolgt die Verschwenkung des Faltmittels 9 um die mit 62b bezeichnete Mittenachse. Man erkennt ferner, dass im Bereich nahe des Austritts der gekrümmten Führung eine pfannenartige, mit Kugelquerschnitt ausgebildete Mulde 62c vorgesehen ist, in der die Endlage des gekrümmten Endbereichs 91 bei aufgerichtetem Faltmittel 9 erreicht ist.

In Fig. 5 kann die Ausgestaltung des Tragbereichs 61 genauer erkannt werden. Der Tragbereich 61 ist als im wesentlichen klammerförmiger Abschnitt ausgestaltet, von dessen mit flacher oberer Kante ausgebildeter Basis 61 a ein äußerer Schenkel 61b und ein innerer Schenkel 61c abgeht, wobei das Ende des äußeren Schenkels 61b eine Umfaltung 61d aufweist, die im wesentlichen horizontal verläuft und die in eine nach außen offene, C-förmige Kammer 49 des Längsträgers 4 eingreift. An den Schenkel 61c ist über eine horizontale Achse ein Paar Tragrollen 71 angeordnet, die sich auf einer Gleitbahn 41 des Längsträgers 4 abstützen. An einem rippenartigen, nach unten weisenden Vorsprung 61 e der Basis 61 a sind vertikal zwei Führungsrollen 72 gelagert, die in eine nach oben offene Kammer 44 des Längsträgers 4 eindringen und mit Spiel zwischen deren vertikalen Wandungen gehalten sind. Mit dem Schlitten 6 einstückig ausgebildet ist ein Fortsatz 73, der zwischen den Tragrollen 71 angeordnet ist und in der in einem C-förmigen Profilabschnitt 42 des Längsträgers 4, der zur Planenaufbaumitte hin offen ist, hineinragt. Der obere Rand des Fortsatzes 73 verläuft kurz unterhalb des oberen Schenkels des C-förmigen Profilabschnitts 42, so dass hierdurch eine Aushebesicherung gegeben ist. Dies ermöglicht es, den oberen Rand der Tragrollen 71 sehr nahe an der Unterseite der Basis 61 a des Abschnitts 61 anzuordnen, so dass eine geringe Bauhöhe des Schlittens hieraus folgt, da kein Profilschenkel mehr die Tragrolle 71 überbauen muss. Man erkennt ferner, dass die Unterkante des Fortsatzes 73 näher an dem unteren Schenkel des C-förmigen Profilabschnitts 42 liegt als die untere Stirnseite der Führungsrolle 72 an dem Grund der nach oben offenen Kammer 44, so dass im Falle eines Versagens der Tragrollen 71 der Fortsatz 42 die Tragfunktion hilfsweise übernimmt und hierbei die Führungsrollen 72 nicht beschädigt werden.

Man erkennt, dass die Führungsrollen 72 nunmehr in dem Höhenabschnitt angeordnet sind, der sich über die Höhe der Tragrolle 71 erstreckt, so dass das obere Ende der Tragrolle 71 die obere Stirnseite Führungsrolle 72 überragt.

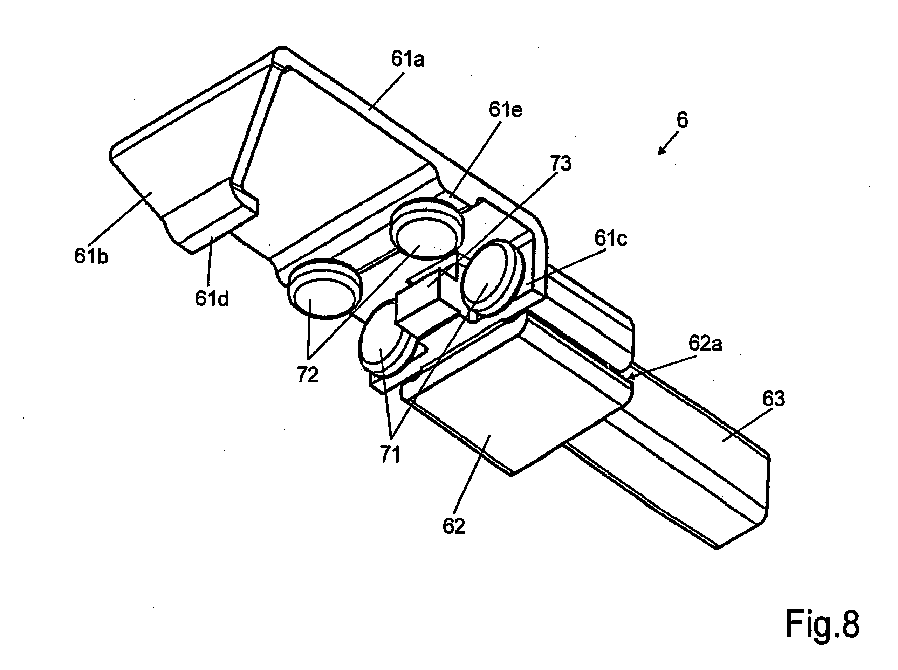

In Fig. 8 ist eine Ansicht des Schlittens 6 dargestellt. Man erkennt, dass der Fortsatz 73 mittig und etwas erhöht, zwischen den beiden Tragrollen 71 angeordnet ist. Man erkennt ferner, dass der Fortsatz 73 einstückig aus dem Kunststoffmaterial hergestellt ist, aus dem der Schlitten 6 insgesamt hergestellt ist. Weiterhin erkennt man, dass es ohne weiteres möglich ist, anstelle der drehbaren Rollen starre Gleitelemente vorzusehen. Schließlich erkennt man, dass die gekrümmte Führung 62a neben der in Richtung der Achse des Spriegels 8 vorgesehenen Einführöffnung einen parallel zur Achse des Spriegels 8 verlaufenden Schlitz bildet, durch den das Faltmittel 9 ein Stück weit ein- und ausfährt.

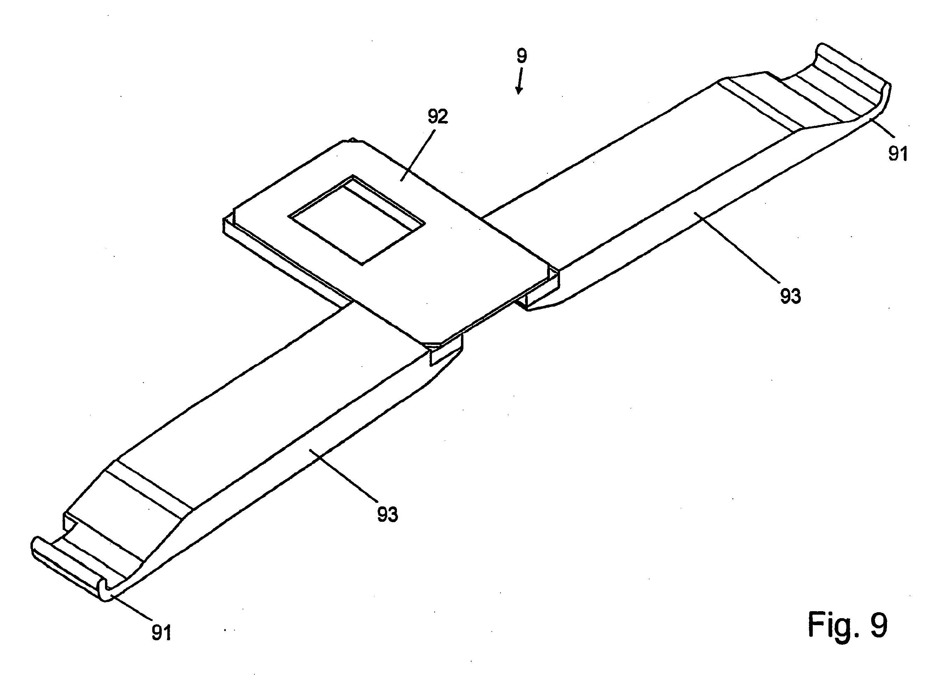

Bezugnehmend auf Fig. 9 bis 11 und Fig. 7 wird nunmehr der Aufbau des Faltmittels 9 näher erläutert. Das Faltmittel 9 weist an seinen beiden Enden einen gekrümmten Endbereich 91 auf, an dessen. Ende eine Verdickung 91a in der Art eines Keders ausgestaltet ist, vgl. Fig. 7. Die Krümmung des Endbereichs 91 entspricht im wesentlichen der Krümmung der Führung 62a, wobei aufgrund der Verdickung 91a ein Einsetzen durch den entlang des Führungsabschnitts 62 verlaufenden Schlitz nicht möglich ist, vielmehr ein axiales Einsetzen aus Richtung des Spriegelschafts 21 erforderlich ist.

Das Faltmittel 9 weist ein mittleres Hubglied 92 auf, welches gegenüber den hieran angeschlossenen äußeren Faltmittelabschnitten 93 nach außen auskragt und, wie insbesondere in Fig. 3 zu erkennen oberhalb der Längsträger 4 zur Auflage kommt. Zwischen dem mittleren Hubglied 92 und den äußeren Faltmittelabschnitten 93 ist eine Sollbiegelinie vorgesehen, die ein Aufstellen des Faltmittels 9 in der Art eines Trapezes ermöglicht, wobei das mittlere Hubglied 92 im wesentlichen mit seiner Oberseite im Kontakt gegen die Dachplane 5 steht und diese anhebt.

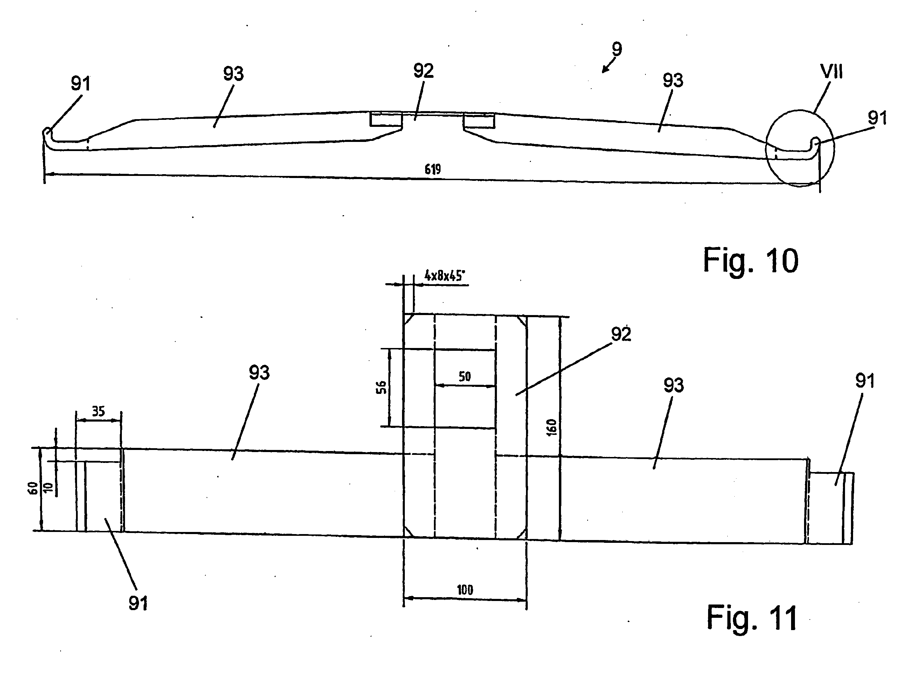

Man erkennt ferner insbesondere in Fig. 10, dass auch bei ausgestrecktem Faltmittel 9 bereits die Form eines Trapezes angedeutet ist, wodurch besonders leicht die Faltung der äußeren Faltmittelabschnitte 93 nach oben induziert wird, da bereits ein Moment eingestellt ist. Das Faltmittel 9 ist insgesamt aus Kunststoff hergestellt und daher flexibel und von geringem Gewicht.

Bei Betrachtung der Figuren 6 und 7 erkennt man, dass beim Aufrichten des Faltmittels 9 das gekrümmte Ende 91 sich von dem oberen Ende der gekrümmten Führung 62a des Schlittens 6 zu dessen unterem Ende mit der Aufnahme 62c verlagert. Dies hat zugleich zur Folge, dass sich der wirksame Teil des Faltmittels 9 beidseitig ein Stück weit verlängert, und dadurch eine besonders effektive Faltung der Plane gewährleistet ist.

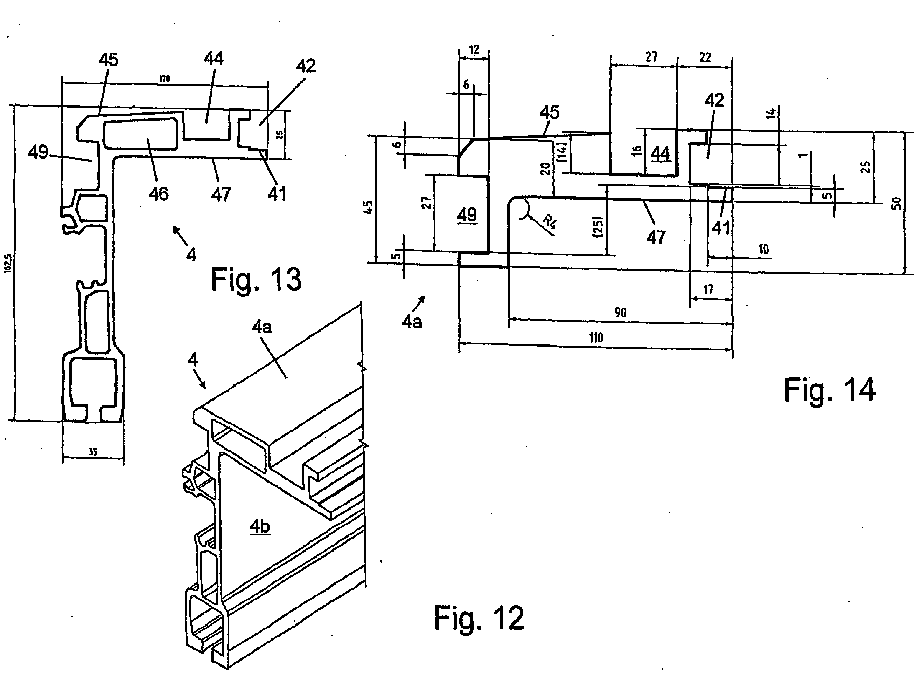

In den Fig. 12 bis 14 sind die Einzelheiten des Längsträgers 4 näher dargestellt. Man erkennt, dass der speziell auf den Schlitten 6 abgestimmte erste Schenkel 4a des Längsträgers 4 im wesentlichen horizontal verläuft, während der weitere Schenkel 4b des Längsträgers 4 im wesentlichen vertikal nach unten abgeht. Man erkennt, dass der weitere Schenkel 4b entsprechend den spezifischen Anforderungen des entsprechenden Verdeckgestells ausgestaltet werden kann, ohne die Besonderheiten des Schenkels 4a zu verändern. Man erkennt die kompakte Bauweise mit der Gleitfläche 41, dem zur Fahrzeugmitte offenen C-förmigen Profilabschnitt 42, der nach oben offenen Kammer 44, und der nach außen weisenden C-förmigen Ausnehmung 49. Man erkennt ferner einen abgeschrägten Bereich 45 zwischen der nach oben offenen Kammer 44 und dem äußeren Rand des Längsträgers 4, sowie eine Hohlkammer 46, die unter dem abgeschrägten Rand 45 vorgesehen ist und die eine im wesentlichen zu dem Rand 45 parallel verlaufende Wandung aufweist. Man erkennt ferner, dass die Unterseite 47 des ersten Schenkels 4a im wesentlichen horizontal ausgebildet ist, so dass die Stapelhöhe der Ladung auf der Ladeplattform kaum eingeschränkt ist. Besonders vorteilhafte Bemaßungen und entsprechende Proportionen des Längsträgers 4 ergeben sich aus den Figuren 12 bis 14.

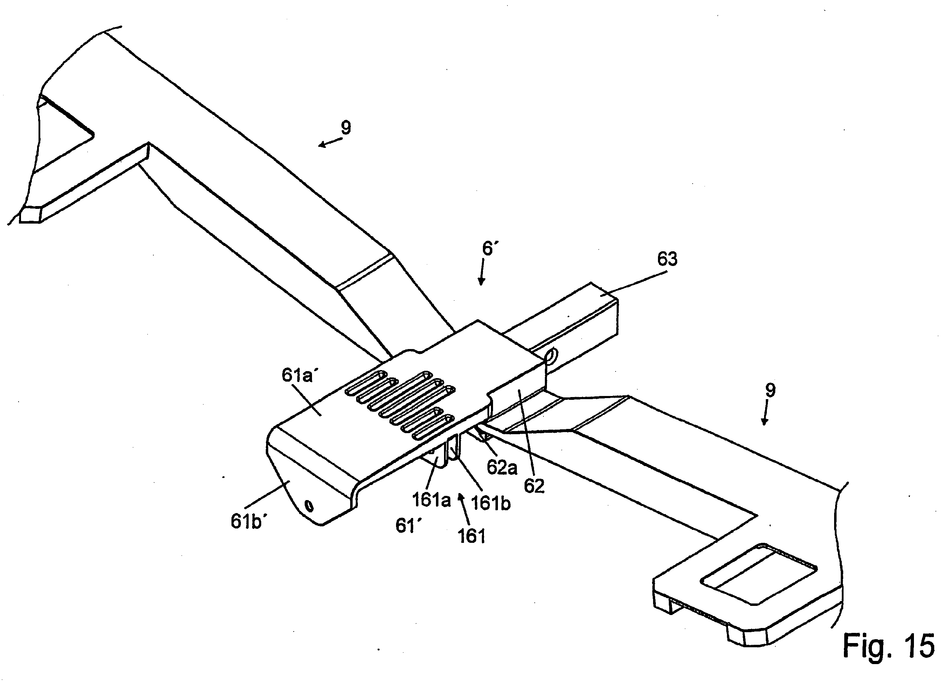

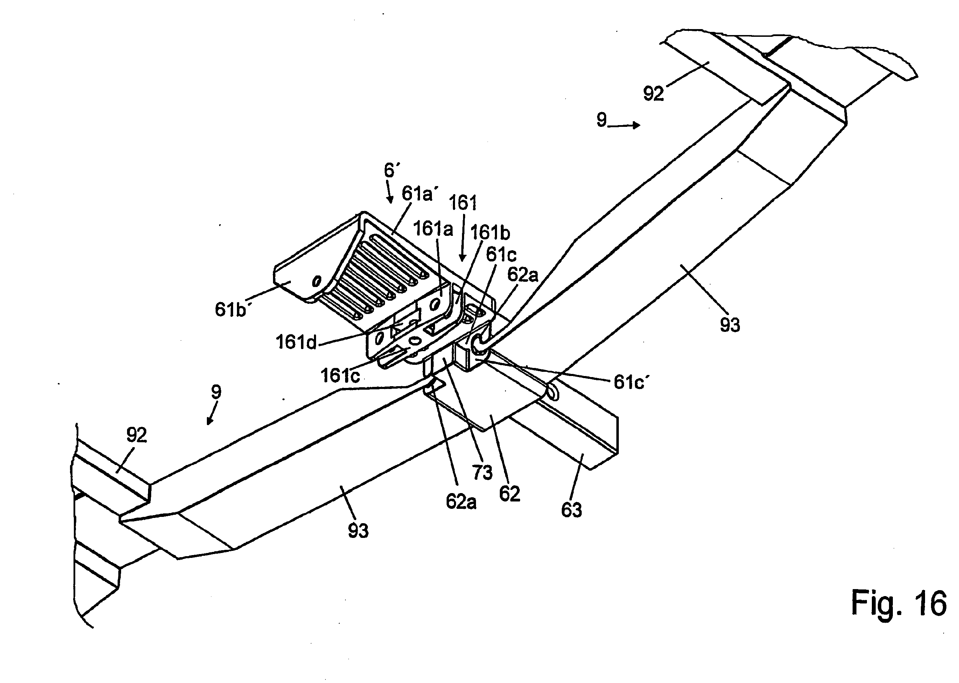

In Fig. 15 bis 19 ist ein zweites Ausführungsbeispiel eines Schlittens 6' mit zugehörigem Längsträger 4' dargestellt, in dem dieselben Bezugszeichen dieselben Teile wie in dem ersten Ausführungsbeispiel beschreiben. Man erkennt, dass die Faltmittel 9 vergleichbar dem vorhergehenden Ausführungsbeispiel der Fig. 2 bis 14 ausgebildet sind. Die Führungen 62a sind beidseitig offen dargestellt, es ist aber möglich, die zu dem Längsträger 4' weisende Stirnseite geschlossen auszubilden. In den Führungen 62a sind die Faltmittel 9 über ein Rastglied, das beim Einschieben überwunden werden kann, gegen Verrutschen gesichert, so dass auch während des Zusammenbaues die Funktionsstellung leicht einzuhalten ist.

Im Unterschied zu dem ersten Ausführungsbeispiel steht bei dem zweiten Ausführungsbeispiel von der Basis 61a' ein Lagerabschnitt 161 nach unten ab, der zur Lagerung sowohl von zwei Tragrollen 71' als auch einer Führungsrolle 72' ausgestaltet ist. Hierzu weist der Lagerabschnitt 161 zwei im wesentlichen vertikal von der Basis 61a' abstehende Rippen 161a, 161b auf, deren einander zugekehrte Flächen im Bereich der Aufnahme der beiden Tragrollen 71' im wesentlichen parallel ausgebildet ist, während die einander abgekehrte Fläche jeweils eine bauchige Wölbung aufweist. In einem Mittenbereich, in dem die einzige Führungsrolle 72' mittig zwischen den beiden Tragrollen 71' gelagert ist, sind die beiden Rippen 161a, 161b miteinander über eine Verbindung 161c verbunden, der eine Verdickung 161d, die einstückig mit der Basis 61a' ausgebildet ist, gegenüberliegend angeordnet ist. Die einander zugekehrten Flächen der Teile 161c, 161d sind parallel zueinander und in wesentlichen horizontal angeordnet.

Zwischen den von den einander zugekehrten Wandungen gebildeten Aufnahmen wird jeweils eine auf einem Schaft 171 bzw 172 gelagerte RoHe 71' bzw. 72' eingesetzt, wobei der Schaft 171 jeweils in Öffnungen der beiden Rippen 161a, 161b aufgenommen ist, während der Schaft 172 in entsprechenden Öffnungen der Teile 161c, 161d eingesetzt wird. Hierdurch sind die Rollen 71', 72' besonders kompakt in der Art eines "+"-Zeichens in derselben Kammer des Längsträgers 4' angeordnet.

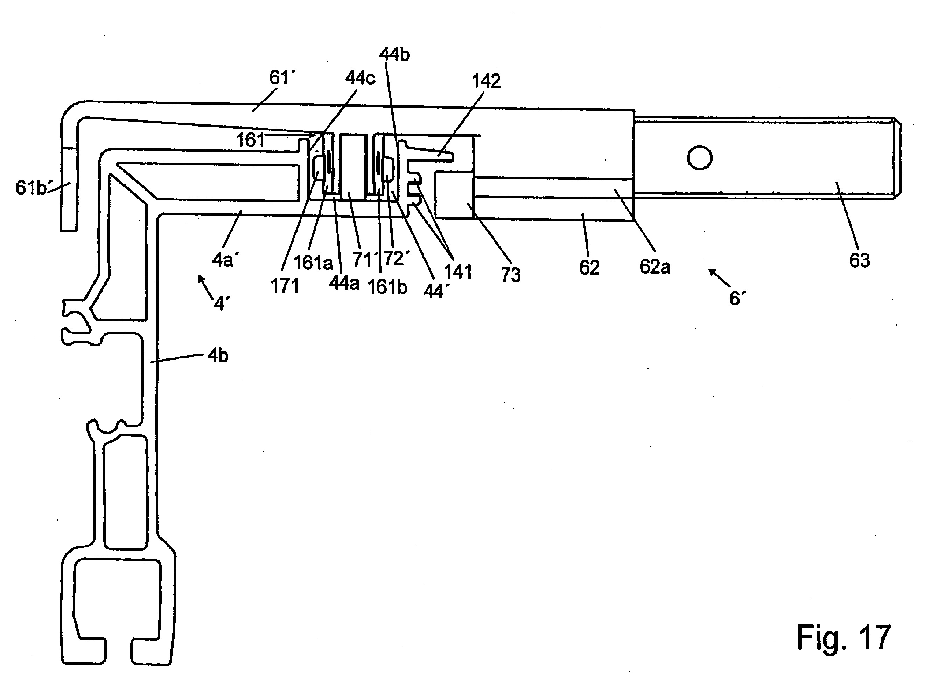

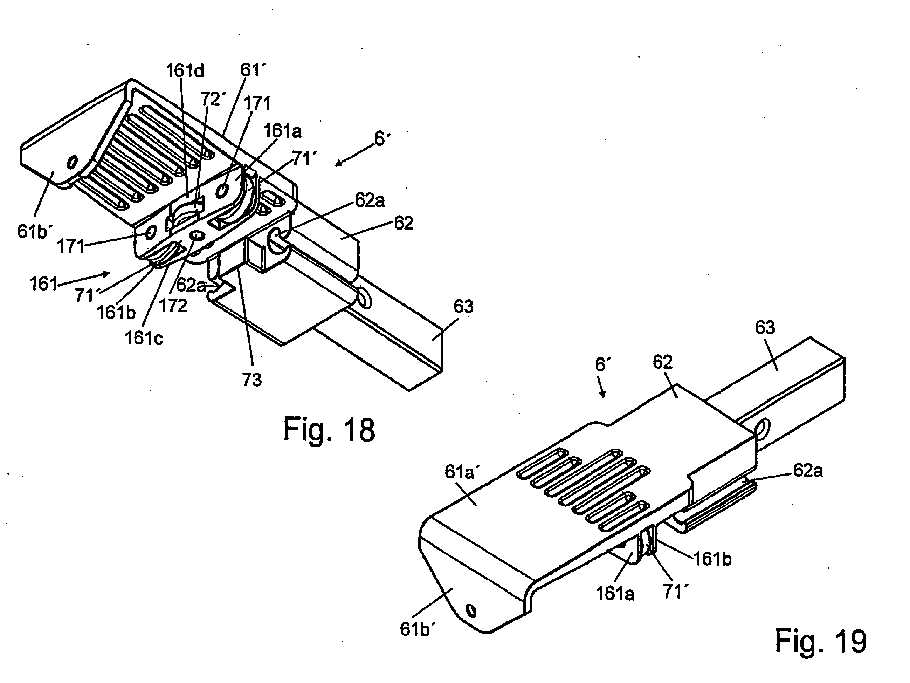

Wie insbesondere in Fig. 18 gut zu erkennen, stehen die Tragrollen 71' über die Kanten der Rippen 161a, 161b vor und stützen sich, wie in Fig. 17 zu erkennen, auf den Grund 44a einer nach oben offenen Kammer 44' ab, während die Führungsrolle 72' in geringem Abstand zu den seitlichen Wandungen 44b, 44c der Kammer 44' in etwa mittig angeordnet ist und so ein geringfügiges Spiel zuläßt. Von der der Kammer 44' abgekehrten Seite der zur inneren Seite gelegenen Wandung 44b stehen zwei Rippen 141 in Höhe des Fortsatzes 73 ab, ferner darüber ein nach innen weisender horizontaler Schenkel 142, der den Fortsatz 73 übergreift und damit eine Aushebesicherung bildet.

Man erkennt ferner, dass der äußere Schenkel 61b keine Abfaltung mehr aufweist, so dass in dem Profil de Längsträgers 4 eine entsprechende, nach außen weisende Kammer nicht mehr erforderlich ist.

### Die Erfindung funktioniert mit gekrümmter Führung nun wie folgt:

Zunächst werden die Faltmittel 9 mit ihren gekrümmten Enden 91 in die gekrümmte Führung 62a jeweils zweier benachbarter Schlitten 6 eingesetzt. Anschließend wird der Spriegelschaft 21 über den Steckbereich 63 des Schlittens 6 geführt, wodurch ein Spriegel 8 mit endseitigen Schlitten 6 und die Schlitten 6 paarweise miteinander verbindenden Faltmitteln 9 geschaffen ist. Anschließend werden die Spriegel auf die Längsträger 4 aufgeschoben.

Bei geschlossener Dachplane befinden sich die Faltmittel 9 in ihrer ausgestreckten Position entsprechend Fig. 3 bzw. Fig. 10, wobei das gekrümmte Ende 91 des Faltmittels 9 tief in die gekrümmte Führung 62a des Schlittens 6 eindringt. Soll die Dachplane freigegeben werden, werden die Spriegel 8 entlang der Längsträger 4 zusammengeschoben, wodurch sich die Faltmittel 9 zum Ausgleich des verringerten Abstands zwischen benachbarten Spriegeln 8 aufrichten. Hierbei wandert das gekrümmte Ende 91 innerhalb der gekrümmten Führung 62a um die Mittenachse 62b nach unten, so dass in der Endstellung der größte Teil des gekrümmten Abschnitts 91 aus der schlitzartigen, verengten Öffnung der gekrümmten Führung 62a herausragt. Hierbei wird der mittlere Hubbereich 92 des Faltmittels 9 angehoben. Ein besonderer Vorteil der Anordnung besteht darin, das die Spriegel 8 unmittelbar aneinander gerückt werden können, wobei die beiden äußeren Faltabschnitte 93 dann eine fast senkrechte Position einnehmen, so dass die Dachplane maximal zusammengeschoben werden kann.

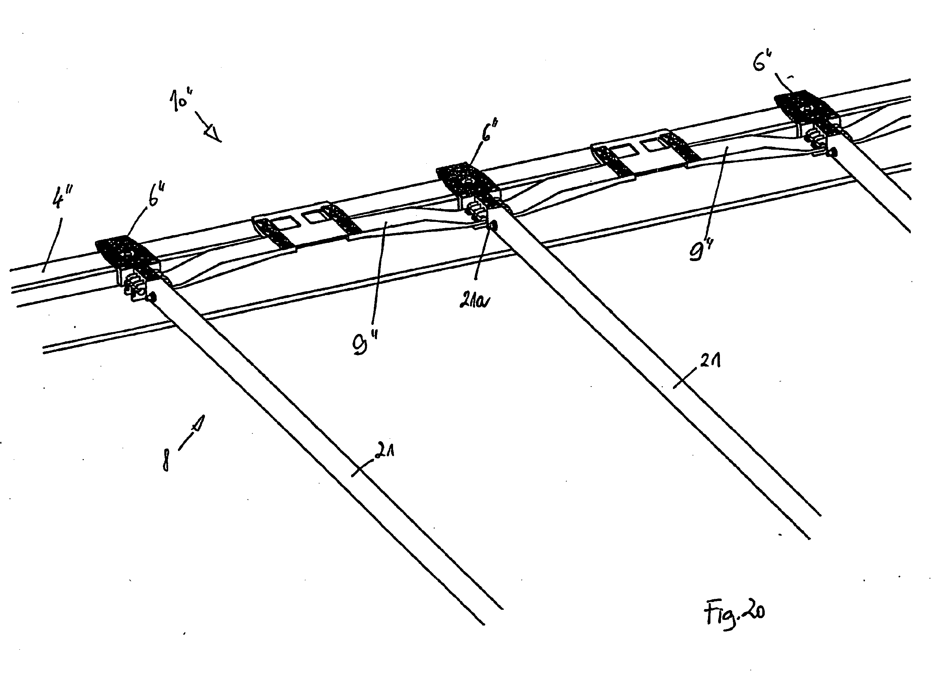

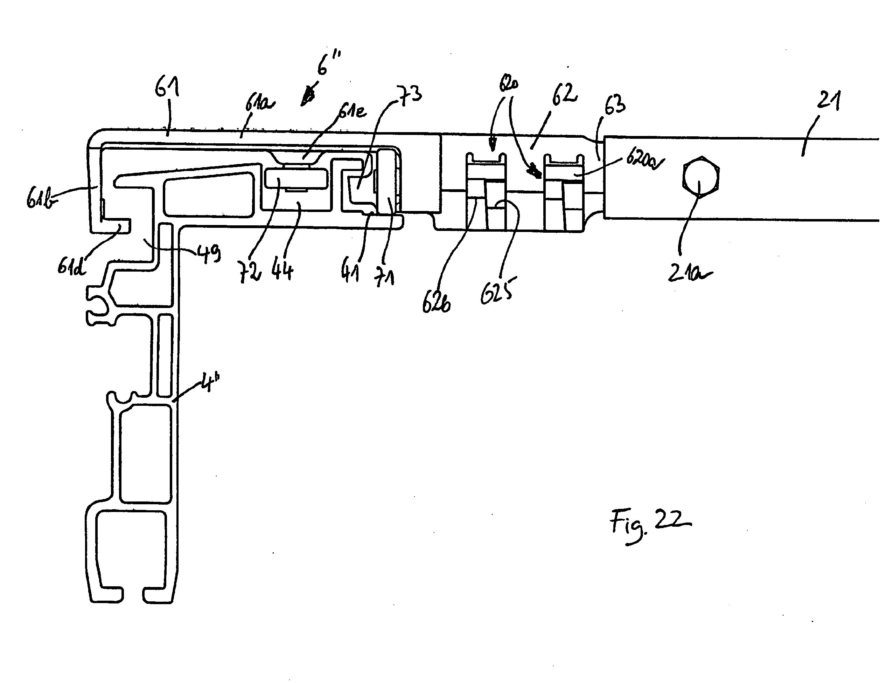

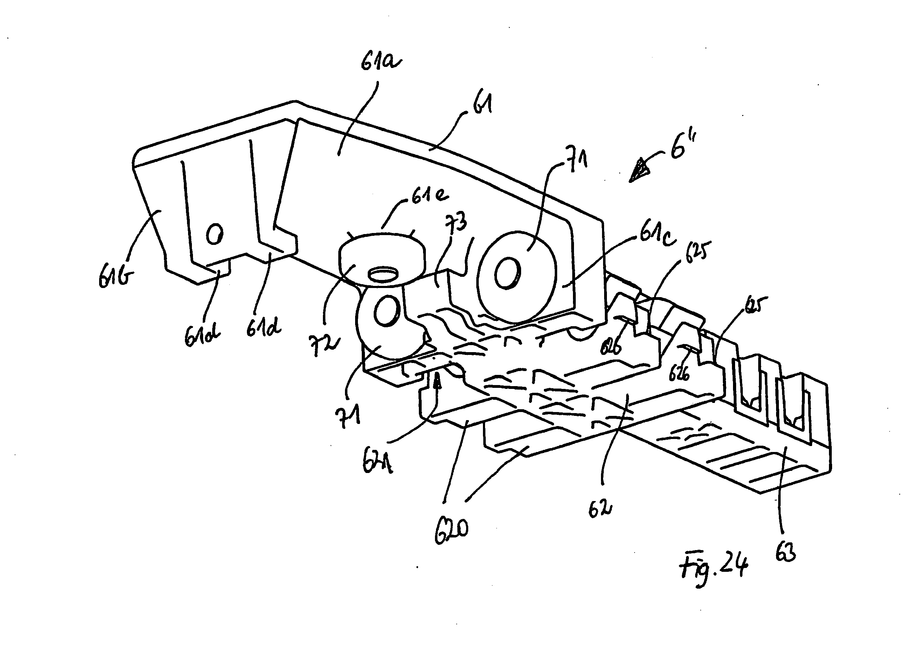

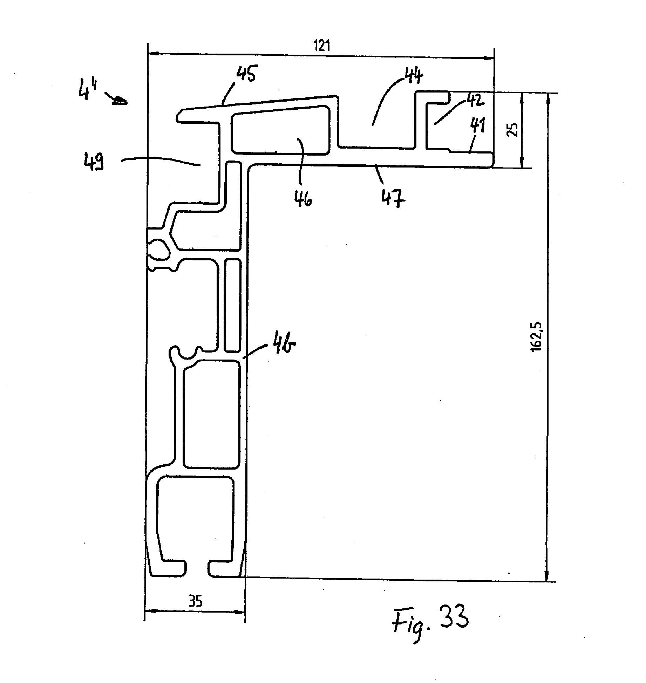

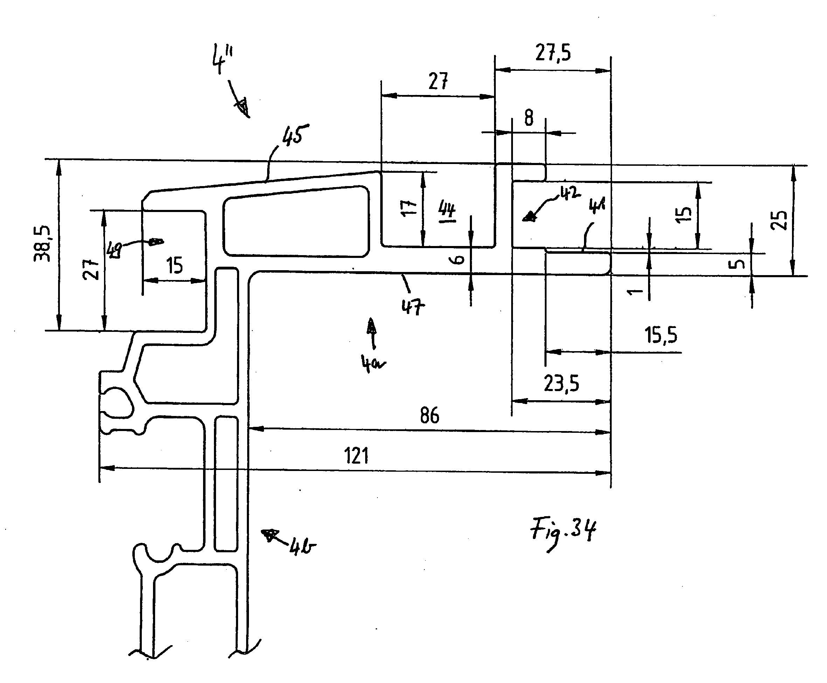

In Fig. 20 bis 34 ist ein drittes Ausführungsbeispiel 6" mit zugehörigem Längsträger 4" dargestellt, in dem dieselben Bezugszeichen dieselben Teile wie in dem ersten Ausführungsbeispiel beschreiben. Man erkennt, dass Längsträger 4" dem Längsträger 4 des ersten Ausführungsbeispiels stark ähnelt, und dass insbesondere die Schlitten 6 und 6" auf den Längsträgern 4 und 4" verfahren werden können. Verschieden ist hingegen die Anbindung der Faltmittel 9" an den Führungsbereich 62.

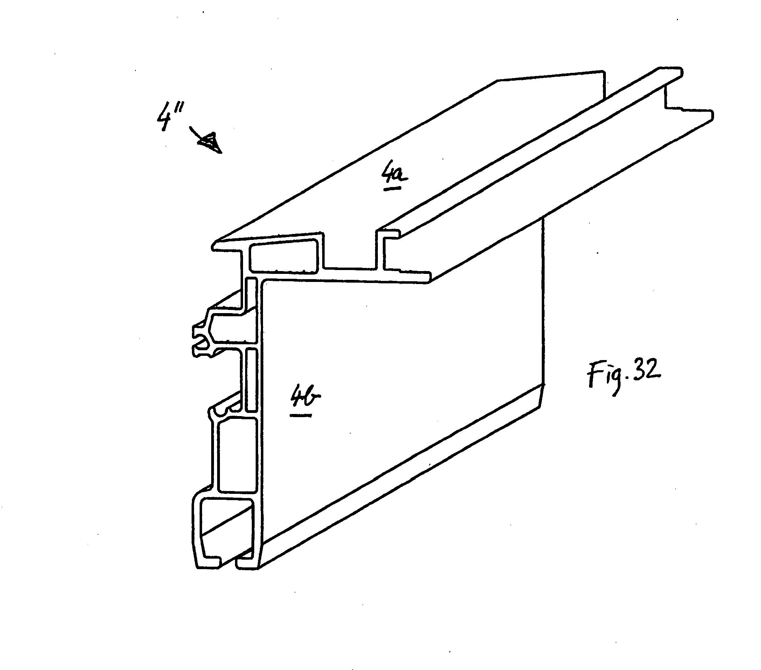

In Fig. 32 bis 34 sind die Einzelheiten des Längsträgers 4" näher dargestellt. Der auf den Schlitten 6 oder 6" abgestimmte erste Schenkel 4a des Längsträgers 4" verläuft im Wesentlichen horizontal, während der weitere Schenkel 4b des Längsträgers 4" im Wesentlichen vertikal nach unten abgeht. Im Unterschied zu dem ersten Ausführungsbeispiel ist der Aufbau des weiteren Schenkels 4b etwas verändert, wodurch eine geradlinige, zur Ladefläche weisende Wand des Längsträgers 4" ermöglicht wird, und ferner durch zusätzliche Hohlräume Material eingespart wird. Insbesondere ist die Kammer 49 gegenüber dem Längsträger 4 etwas nach oben versetzt worden, wodurch die Höhe des weiteren Schenkels 4b insgesamt geringfügig verkürzt werden kann.

Auch der Längsträger 4" weist eine kleine Stufe von etwa 1 mm Höhe zwischen der Gleitfläche 41 und dem Grund des C-förmigen Profilabschnitts 42 auf, der ein vorteilhaftes Zusammenwirken mit den Tragrollen 71 bzw. dem Fortsatz 73 ermöglicht. Man erkennt ferner, dass die Breite der Gleitfläche 41 gegenüber dem ersten Ausführungsbeispiel vergrößert wurde und diese nunmehr nahezu das doppelte der Tiefe des C-förmigen Profilabschnitts 42 ausmacht, während in dem ersten Ausführungsbeispiel das Verhältnis nur etwas mehr als dem 1,5-fachen beträgt. Ferner liegen der Grund des C-förmigen Profilabschnitts 42 und der Grund der nach oben offenen Kammer 44 nunmehr auf einer Ebene.

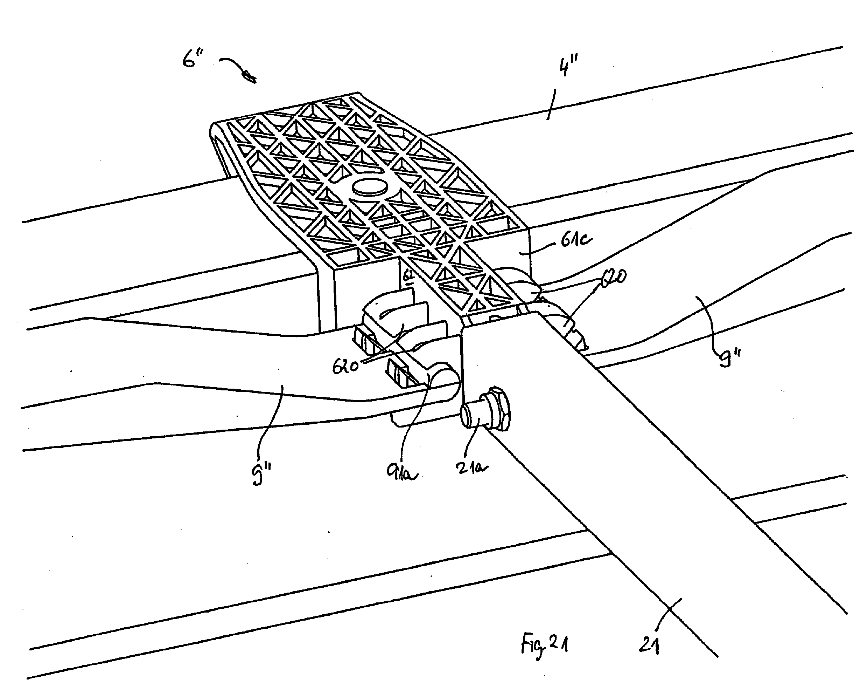

In Fig. 20 und 21 erkennt man, dass das Verdeckgestell 10" wiederum aus Längsträgern 4" und Spriegeln 8 besteht, wobei benachbarte Spriegel 8 mit Faltmitteln 9" paarweise im Bereich der Längsträger 4" miteinander verbunden sind, wobei die Spriegel 8 gebildet sind durch einen Spriegelschaft 21, der als Hohlteil ausgebildet ist und der über ein Verbindungsmittel 21a jeweils endseitig mit einem Schlitten 6" verbunden ist. Der Steckbereich 63 des Schlittens 6" unterscheidet sich strukturell nur geringfügig von dem des ersten Ausführungsbeispiels, und zeichnet sich insbesondere dadurch aus, dass quer zu der Achse des Spriegelschafts 21 bereits Ausnehmungen vorgesehen sind, die ein Einstecken von Verbindungsmitteln 21 a erleichtern. Der Tragbereich 61 unterscheidet sich geringfügig von dem Tragbereich 61 des ersten Ausführungsbeispiels, insbesondere dadurch, dass nur eine Führungsrolle 72 erforderlich ist, die an einem nicht mehr die Breite des Schlittens 6" überspannenden, sondern diesen nur punktuell nach unten fortsetzenden Vorsprung 61e angeordnet ist. Ferner ist der äußere Schenkel 61b im Wesentlichen senkrecht angeordnet, und die Abfaltung besteht im Wesentlichen aus zwei in Richtung auf die Kammer 49 vorstehenden flachen Vorsprüngen 61d.

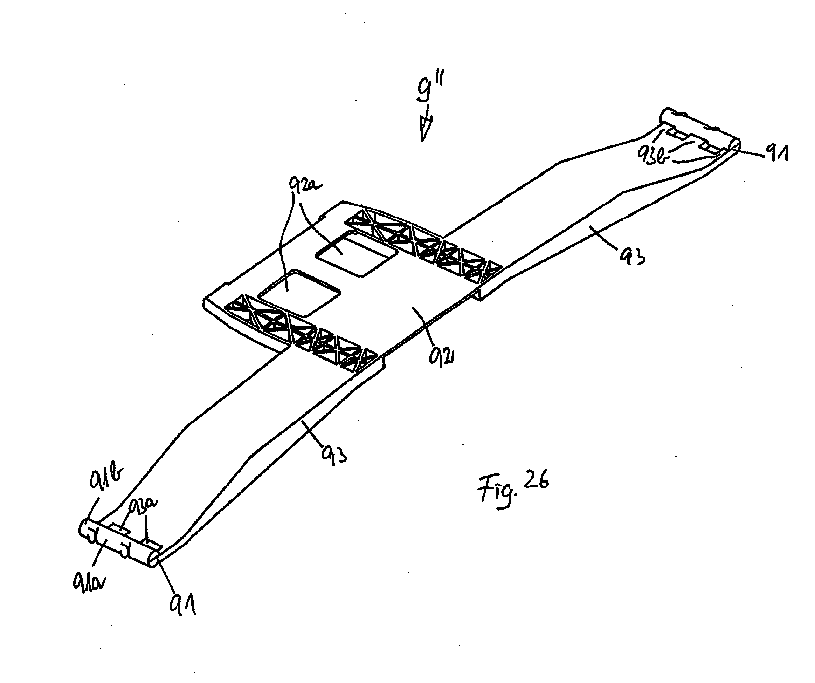

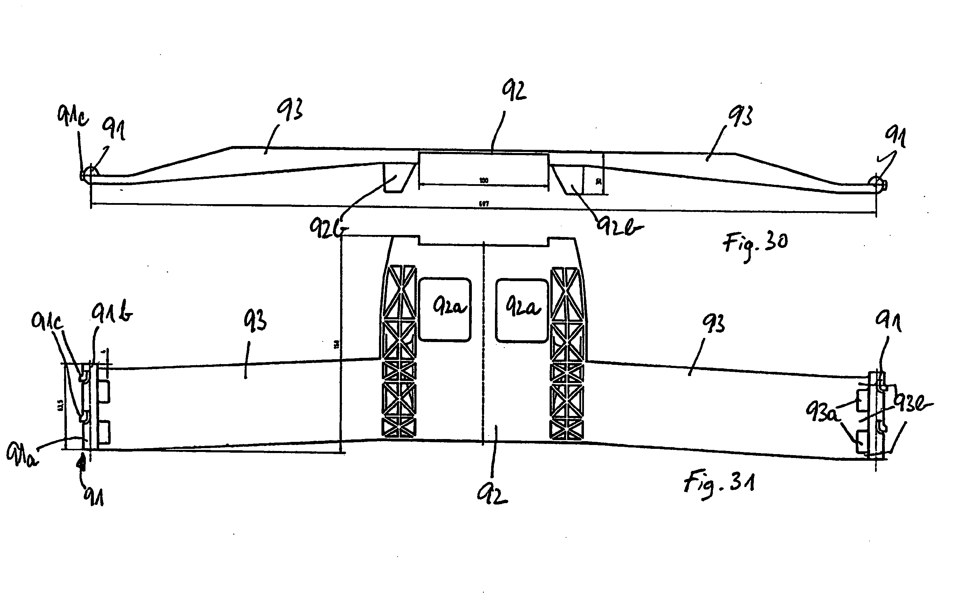

Unter Bezugnahme auf Fig. 26 bis 31 lässt sich der gegenüber dem ersten Ausführungsbeispiel geänderte Aufbau der Faltmittel 9" erkennen. Ebenso wie bei dem ersten Ausführungsbeispiel umfasst das Faltmittel 9" ein mittleres Hubglied 92, welches gegenüber den hieran angeschlossenen äußeren Faltmittelabschnitten 93 nach außen auskragt und oberhalb des Längsträgers 4" mit dem auskragenden Bereich zur Auflage gelangt. Anders als im ersten Ausführungsbeispiel ist aber zwischen dem Hubglied 92 und den Faltmittelabschnitten 93 keine Sollbiegelinie vorgesehen, vielmehr ist der Bereich des Hubglieds 92 aus mit schwächerer Materialdicke ausgebildet und weist darüber hinaus zwei symmetrisch in der Fläche des Hubglieds 92 ausgebildete Aussparungen 92a auf, so dass es auf Grund der Materialschwäche zu einer Faltung im Bereich des Hubgliedes 92 kommt. Man erkennt ferner in Fig. 30, dass auf der Unterseite des Hubglieds 92 jeweils im zu den Faltmittelabschnitten 93 angrenzenden Bereich ein Ausrichtglied 92b vorgesehen ist, das im Wesentlichen mit der zum Längsträger 4" weisenden Seite des Schenkels 61c fluchtet und damit in dem Bereich neben dem Längsträger 4" vorgesehen ist, wodurch eine Positionierhilfe bei geschlossener Dachplane 5 gegeben ist, da das Hubglied 92 dann nicht nur mit seiner Unterseite in Anlage gegen die Oberfläche des Längsträgers 4" gelangt, sondern auch mit den zum Längsträger 4" zugekehrten Begrenzungen der Teile 92b gegen dessen nach innen weisende Kante.

Im Unterschied zum ersten Ausführungsbeispiel ist der Endbereich 91 des Faltmittels 9" nicht gekrümmt ausgebildet, sondern läuft im Wesentlichen horizontal zu einem einstückig mit dem Kunststoff-Faltmittel 9" ausgebildeten Zapfenbereich aus, der einen Zapfen 91a aufweist, der dazu bestimmt ist, in die Führung 62a des Führungsabschnitts 62 des Schlitten 6" eingesetzt zu werden, wie weiter unten näher erläutert wird.

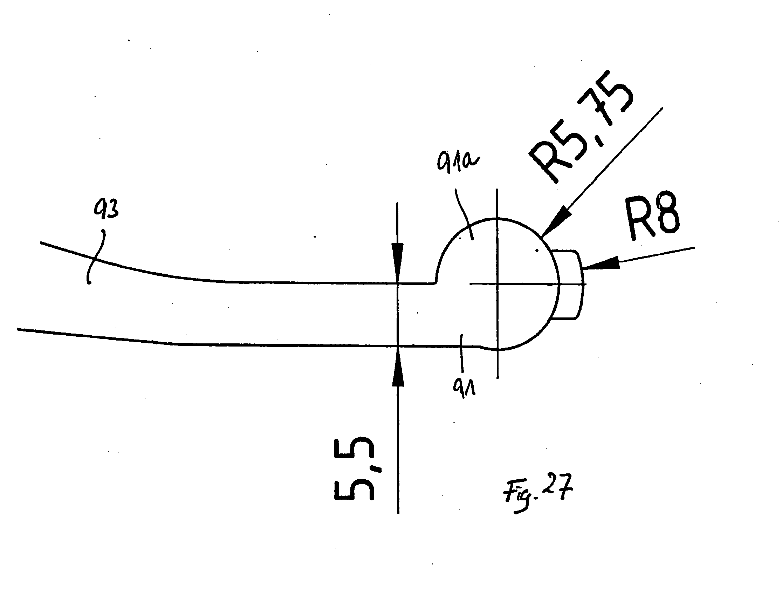

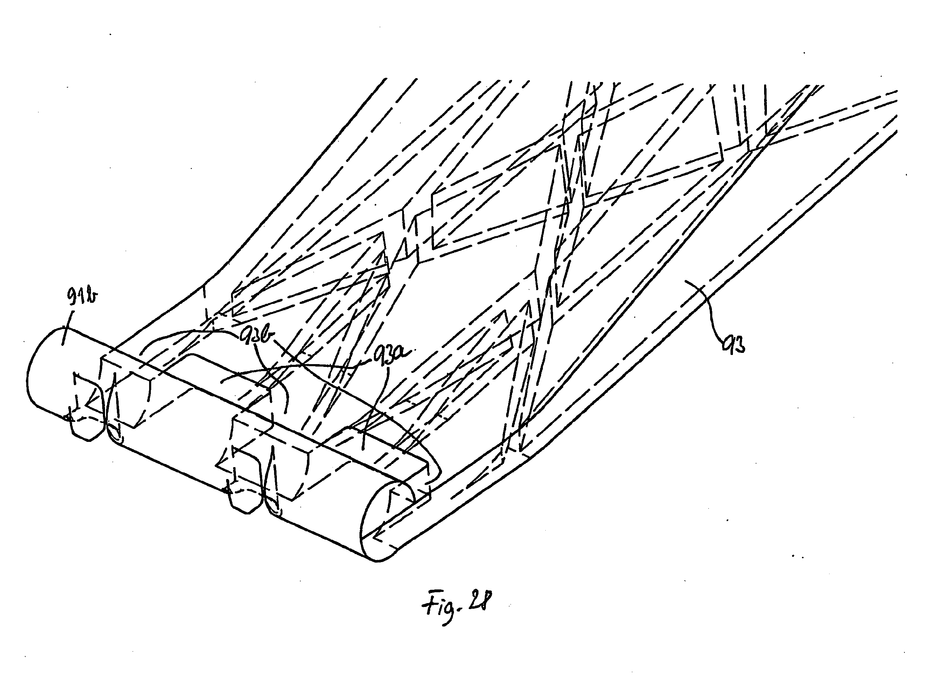

Der horizontale Übergang des Faltmittelabschnitts 93 zum Endabschnitt 91 mit dem Zapfen 91a ist insbesondere in Fig. 27 und 28 gut zu erkennen. Man erkennt, dass die äußeren Faltmittelabschnitte 93 auf ihrer Oberseite weitestgehend glatt ausgebildet sind, während sie auf ihrer Unterseite mit Verrippungen ausgestattet sind, um die Steifigkeit zu erhöhen und das sonst durch die Dicke des Materials vorgegebene Gewicht zu reduzieren. Man erkennt ferner, dass der Zapfen 91 a gegenüber dem äußeren Faltmittelabschnitt 93 ein kleines Stück von etwa 4 mm vorsteht, wobei dieser Fortsatz 91 b in einem besonderen Bereich der Führung 62a aufnehmbar ist, wie weiter unten noch näher erläutert wird.

Ferner sind an dem Zapfen 91a Abstellungen oder Ausrücknasen 91c ausgebildet, die über den Umfang des Zapfens 91a vorstehen und beim Einschieben des Zapfens 91a in die Führung 62a in den Bereich des Zapfens hineingedrängt werden, aber den Zapfen 91a wirksam daran hindern, wieder herausgezogen zu werden. Die Abstellungen oder Ausrücknasen 91c sind einstückig mit dem Zapfen 91a und dem Faltmittel 9" hergestellt, wobei der Zapfen 91a im Bereich der Ausrücknasen 91c entsprechend ausgespart ist, damit die Ausrücknasen 91c beim Einsetzen des Zapfens 91a in die Aussparung hinein verdrängt werden können.

In dem an dem Zapfen 91a angrenzenden Bereich des äußeren Faltmittelabschnitts 93 sind zwei Aussparungen 93a vorgesehen, so dass sich Stege 93b zur seitlichen Begrenzung der Aussparungen 93a bilden, die im Wesentlichen den Zapfen 91a mit dem übrigen äußeren Faltmittelabschnitt 93 verbinden. Es ist möglich, die Breite der Stege 93b unterschiedlich zu wählen. Es ist ferner möglich, die Aussparungen 93a an ihrer dem Zapfen 91a abgekehrten Längskante mit einer Stufung 93a' auszubilden, die gegen einen entsprechend, am Schlitten 6" ausgebildeten Anschlag stossen kann, um zu verhindern, dass das Faltmittel 9" unter eine horizontale Lage hinunter abtaucht.

Unter Bezugnahme auf Fig. 21 bis 25 wird nun die Führung 62a an dem Führungsabschnitt 62 des Schlittens 6" und deren Zusammenwirken mit dem Endbereich 91 und dem Zapfen 91a des Faltmittels 9" näher erläutert.

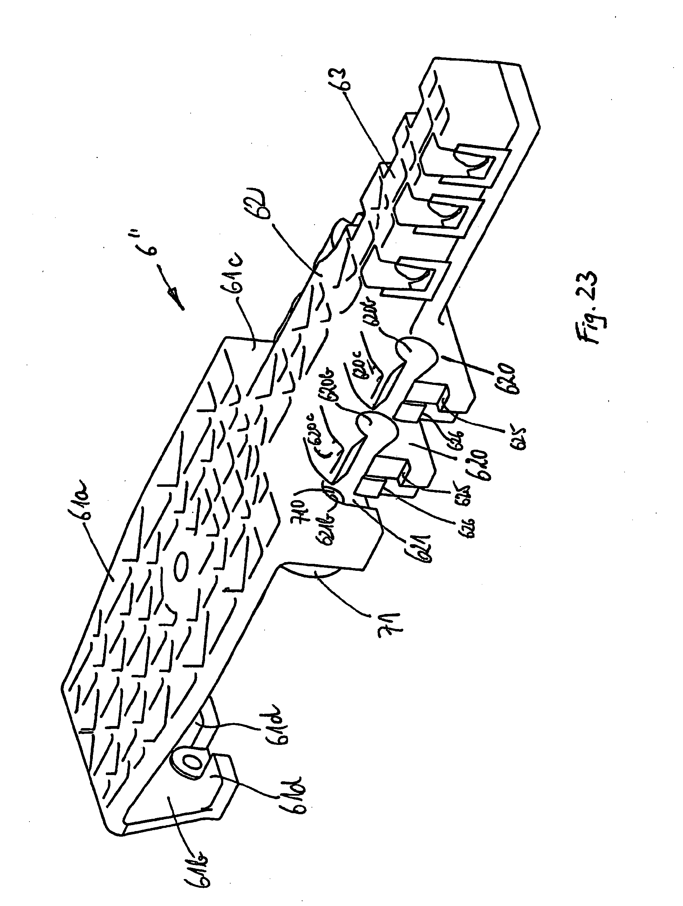

Wie insbesondere in Fig. 23, in der der Schlitten 6" ohne eingesetztes Faltmittel 9" dargestellt ist, gut zu erkennen, weist der Führungsabschnitt 62 des Schlitten 6" auf beiden Seiten jeweils zwei klauenartige Aufnahmen 620 sowie ein Widerlager 621 auf, die miteinander ausgefluchtet sind und eine führung 62a für die Aufnahme des Zapfens 91a bilden. Die Führung 62a ist hier eine solche, in der der Zapfen 91a zwar schwenkbar ist, in dem jedoch eine Verlagerung wie in der gekrümmten Führung 62a des ersten Ausführungsbeispiels nicht möglich ist. Insoweit beschränkt sich die Führung 62a des vorliegenden Ausführungsbeispiels auf das axiale Einsetzen des Zapfens 91a und das anschließend schwenkbare Lagern dieses Zapfens 91a in der Führung 62a.

Entsprechend ist in der klauenartigen Aufnahme 620 und in dem Widerlager 621 jeweils eine Ausnehmung gebildet, die eine zumindest überwiegend zylindrische Außenkontur aufweist, wobei vorzugsweise durch die Teile 620, 621 der Führung 62a wenigstens ein Umfang von mehr als 180° umschlossen wird, um den Zapfen 91a stabil aufzunehmen, wobei vorzugsweise zumindest eines der Teile 620, 621 wenigstens 180° des Umfangs des Zapfens 91a begrenzt und vorzugsweise die klauenartigen Aufnahmen lediglich einen Schlitz 620a aufweisen, der für den Durchtritt der Stege 93b beim Einschieben des Faltmittels 9" in die Aufnahme 62a erforderlich ist.

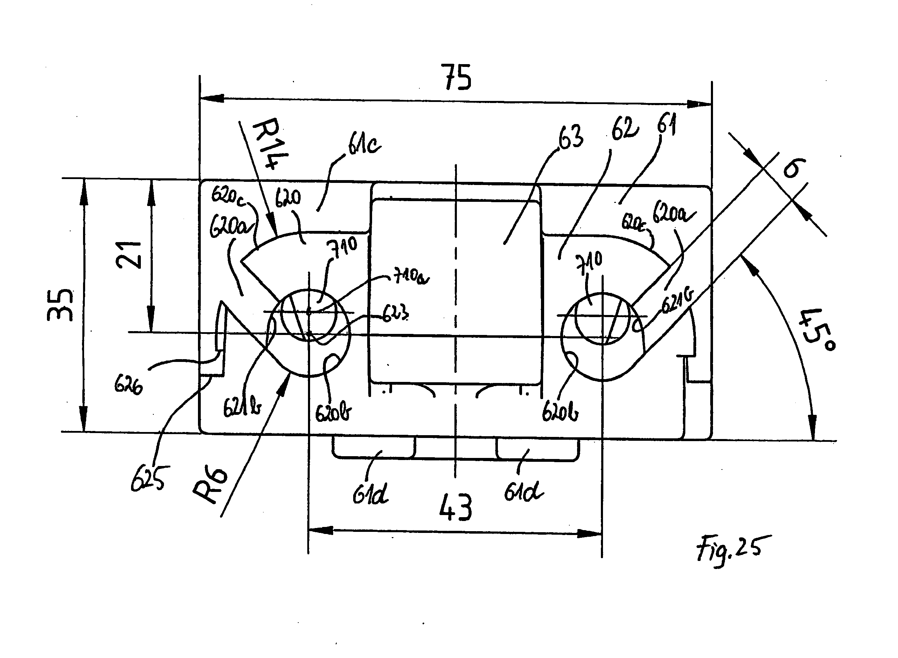

Der Schlitz 620a ist zweckmäßigerweise derart angeordnet, dass er das Einschieben des Faltmittels 9" in einer Neigung von ungefähr 45° ermöglicht, so dass der Schlitz in eine Richtung gerichtet ist, in der die Belastungen in Richtung auf den Schlitz 620a durch das Faltmittel 9" besonders gering sind, anders als dies in der Horizontalen oder in der Vertikalen möglicherweise wäre. In Fig. 25 ist eine Innenkontur 620b der klauenartigen Aufnahme 620 zu erkennen, ferner ein Teil der Innenkontur 621b des Widerlagers 621, weiterhin der Lagerzapfen 710 für die Tragrolle 71, der den Schenkel 61c des Schlittens 6" durchsetzt. Man erkennt, dass die Achse 710a des Lagerzapfens 710 und die Achse 623 der Führung 62a zueinander parallel verlaufen und darüber hinaus nur in der Höhe geringfügig zueinander versetzt sind. Man erkennt ferner, dass die klauenartige Aufnahme 620 einstückig mit dem übrigen Schlitten 6" aus Kunststoff ausgebildet ist, und dass die Außenkontur 620c der klauenartigen Aufnahme 620 ebenfalls abgerundet ist, um eine Schwenkbewegung des Faltmittels 9" zu ermöglichen, wobei hier insbesondere die Aussparungen 93a derart bemessen sind, dass sie um die Außenkontur 620c herumschwenken können. Es versteht sich, dass auch nur eine klauenartige Aufnahme 620 vorgesehen sein kann, ebenso mehr als zwei klauenartige Aufnahmen 620, wobei deren Breite dann verringert wird, um die Baulänge des Lagerabschnitts 62 nicht vergrößern zu müssen. Es versteht sich ferner, dass eine klauenartige Aufnahme 620 ebenfalls im Bereich des Schenkels 61c anstelle des Widerlagers 621 vorgesehen sein kann, wobei dann diese hinterste klauenartige Aufnahme vorzugsweise geschlossen ist. Schließlich kann auch die gesamte Führung 62a durch eine einzige, die Breite des Lagerabschnitts 62a weitgehend ausmachende, klauenartige Aufnahme 620 gebildet sein, wobei dann vorzugsweise in dem Innenumfang 620b Ausnehmungen für die Rastmittel 91c vorgesehen sind. In diesem Fall kann vorzugsweise eine von außen zugängliche Öffnung in der klauenartigen Aufnahme 620 zu den Rastmitteln vorgesehen sein, um diese abzuscheren, wenn ein Faltmittel 9" aus dem Schlitten 6" gelöst werden soll.

Es ist ferner möglich, die Stege 93b nicht zueinander parallel auszubilden, sondern einen Winkelversatz vorzusehen, wenn dann die Winkel der Schlitze 620a der klauenartigen Aufnahme 620 ebenfalls zueinander versetzt sind, wodurch mit dem axialen Einschieben des Endbereichs 91 der Faltmittel 9" zugleich eine gestufte Schwenkbewegung ausgeführt werden muss.

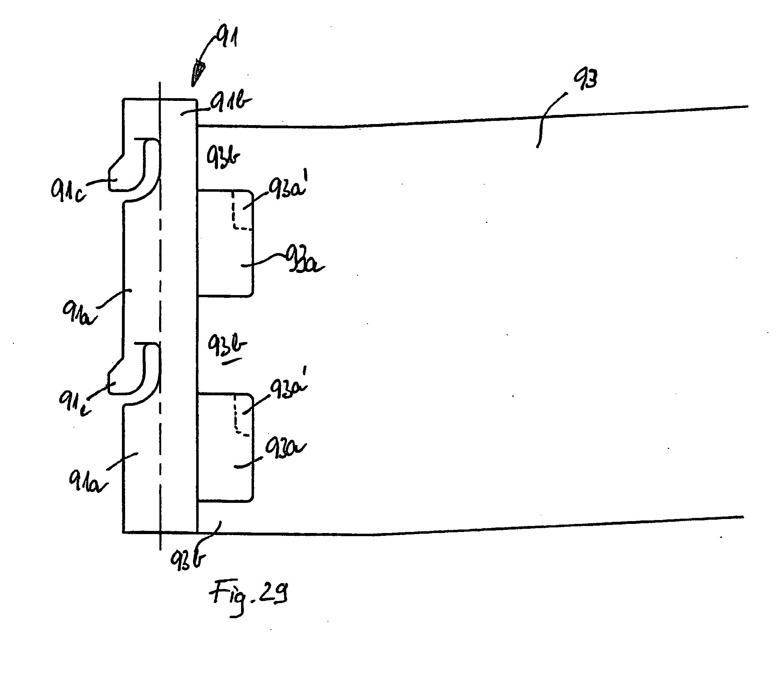

An dem Schlitten 6", vorliegend an den klauenartigen Aufnahmen 620, ist eine horizontale Auflagefläche 625 vorgesehen, die einen Anschlag für das Faltmittel 9" genau dann bilden kann, wenn in dessen Aussparung 93a, wie in Fig. 29 dargestellt, eine Stufung 93a' vorgesehen ist. Diese Stufung 93a' kommt auf der Auflagefläche 625 zur Auflage und verhindert ein unbeabsichtigtes Verschwenken des Faltmittels 9" über eine horizontale Lage hinaus nach unten. Man erkennt in Fig. 23, dass die Breite in Richtung der Spriegelachse der Auflagefläche 625 etwas weniger als die Hälfte, jedenfalls nur einen Bruchteil der Breite der klauenartigen Aufnahme 620 ausmacht, und dass die Stufung 93a' im Wesentlichen an die Breite der Auflagefläche 625 angepasst ist. Hierdurch ist es möglich, über einen weiteren, seitlich versetzten Abschnitt des Schlittens 6" oder der klauenartigen Aufnahme 620 eine zur Auflage 625 im Wesentlichen parallele, von dieser beabstandete Gegenfläche 626 auszubilden, die es ermöglicht, zwischen den beiden Flächen 625, 626 einen Gegenstand klemmend einzuspannen, insbesondere eine Blattfeder, für den Fall, dass ein in der klauenartigen Aufnahme 620 schwenkbar gelagertes Teil vorgespannt werden soll.

Ferner bildet der Korpus des Führungsabschnitts 62 einen Anschlag für die Faltmittel 9" bei ungefähr 110°, so dass auch hier ein Überschlag nicht zu befürchten ist.

Wird nun der Endabschnitt 91a eines Faltmittels 9" in die Führung 62a aus Richtung des Spriegelschafts 21 in Richtung auf den Längsträger 4" eingeschoben, was vorzugsweise vor der Verbindung des Steckabschnitts 63 mit dem Spriegelschaft 21 erfolgt, führt das Vorbeischieben der Rastmittel 91c an dem klauenartigen Aufnahmen 620 zu einem Verdrängen der Rastmittel 91c, die auf Grund ihrer Eigenspannung zurück in ihre ausgestellte Lage zurückfedern. Bei vollständig eingeschobenem Zapfen 91a, bei dem der Vorsprung 91b des Zapfens 91a in dem Widerlager 621 eingeschoben ist, springen die Rastmittel 91 c heraus und stehen mit ihrem über den Umfang des Zapfens 91a überstehenden Bereich in Anlage gegen die jeweils nach außen weisende Stirnwand der klauenartigen Aufnahme 620, wodurch ein Zurückziehen durch den so geschaffenen Formschluss nicht möglich ist. Durch die Schwenkbewegung der Faltmittel 9" und die Verlagerung des Schlittens 6" werden die Rastmittel 91c praktisch nicht belastet, so dass diese klein dimensioniert werden können. Die Führung 62a ermöglicht eine Verschwenkung des Zapfens 91a, so dass die Faltmittel 9" sich bei zusarrimenschiebenden Spriegeln 8 ohne Weiteres aufstellen und die Dachplane nach oben verlagern. Wegen der Verriegelung durch die Rastmittel 91c ist es nicht erforderlich, den zum Spriegelschaft 21 weisenden Eintrittsbereich in die Führung 62a durch den Spriegelschaft 21 oder ein anderes Teil zu verschliessen. Damit können vorteilhaft neue Faltmittel 9" auch ohne Lösen des Spriegelschafts 21 von dem Steckabschnitt 63 in die Führung 62a eingesetzt werden.

Die Erfindung ist vorstehend anhand von drei Ausführungsbeispielen erläutert worden, wobei die Schlitten 6 und 6' im Wesentlichen den Lagerabschnitt 62 in gleicher Weise ausgebildet haben, und die Schlitten 6 und 6" im Wesentlichen den Tragbereich 61 gleich ausgebildet haben. Es versteht sich, dass es ohne Weiteres möglich ist, einen Schlitten derart zu gestalten, dass der Tragbereich des Schlittens 6' mit dem Führungsbereich des Schlittens 6" kombiniert wird, oder aber die Bestandteile der verschiedenen Schlitten in anderer zweckmäßiger Weise miteinander zu kombinieren. Es versteht sich, dass auch von den Ausführungsbeispielen abweichende Bereiche der Schlitten vorgesehen werden können, die jeweils an die passenden Faltmittel und/oder an die passenden Längsträger angepasst werden.

Es versteht sich schließlich, dass die vorstehend beschriebenen Verfahren zur Montage eines Faltmittels an einen Schlitten durch axiales Einschieben des Endbereichs des Faltmittels in die Führung des Schlittens und formschlüssiges Festlegen in der Führung des Schlittens technische und wirtschaftliche Vorteile aufweisen.

## Patentansprüche

1. Verdeckgestell für einen Planenaufbau, umfassend eine Mehrzahl von entlang seitlicher Längsträger (4; 4'; 4") verlagerbarer Spriegel (8), die an ihren beiden Enden jeweils einen Schlitten (6; 6'; 6") aufweisen, wobei im Bereich der Schlitten (6; 6'; 6") Faltmittel (9; 9") für die Zwangsfaltung einer Plane (5) vorgesehen sind, wobei jeweils zwei benachbarte der Schlitten (6; 6'; 6") jeweils eine Führung (62a) aufweisen, in welche Führungen (62a) der beiden benachbarten Schlitten (6; 6'; 6") ein Faltmittel (9; 9") eingesetzt ist,
**dadurch gekennzeichnet**
das jedes der Faltmittel (9; 9") eine Verdickung (91 a) aufweist,
dass die Faltmittel (9; 9") von der Verdickung (91 a) radial abstehen,
dass die Führung (62a) eine Durchbrechung (620a) für den Durchtritt eines Endabschnitts (91) des Faltmittels (9") aufweist, und
dass die Verdickung (91a) von einer Seite entlang ihrer Achse gemeinsam mit den Faltmitteln (9; 9") in die Führung (62a) einschiebbar ist.

2. Verdeckgestell nach Anspruch 1, **dadurch gekennzeichnet, dass** die Führung (62a) in einer Wandung des Schlittens (6") ein Widerlager (621) aufweist, das zumindest nach oben geschlossen ist.

3. Verdeckgestell nach Anspruch 1 oder 2, **dadurch gekennzeichnet, dass** der Schlitten (6") eine Auflagefläche (625) aufweist, welche die Faltmittel (9") an einem Schwenken unter die Horizontale hindert.

4. Verdeckgestell nach einem der Ansprüche 1 bis 3, **dadurch gekennzeichnet, dass** die Faltmittel (9") wenigstens eine Aussparung (93a) aufweisen.

5. Verdeckgestell nach einem der Ansprüche 1 bis 4, **dadurch gekennzeichnet, dass** die Führung (62a) durch wenigstens eine klauenartige Aufnahme (620) begrenzt wird, und dass die klauenartige Aufnahme (620) die Durchbrechung (620a) für den Durchtritt eines Endabschnitts (91) der Faltmittel (9") aufweist.

6. Verdeckgestell nach einem der Ansprüche 1 bis 5, **dadurch gekennzeichnet, dass** die Führung (62a) eine im wesentlichen zylindrische Form aufweist, dass die Verdickung als Zapfen (91 a) ausgebildet ist, und dass ein in der Führung gehaltener Endabschnitt (91) der Faltmittel (9") in der Führung (62a) drehbar ist und eine Schwenkachse definiert.

7. Verdeckgestell nach einem der Ansprüche 1 bis 6, **dadurch gekennzeichnet, dass** die Durchbrechung (620a) eine Breite aufweist, die an die Dicke der Faltmittel (9") nahe dem Endabschnitt (91) der Faltmittel (9") angepasst ist.

8. Verdeckgestell nach einem der Ansprüche 1 bis 4, **dadurch gekennzeichnet, dass** die Faltmittel (9) endseitig in einer gekrümmten Führung (62a) des Schlittens (6; 6') einsetzbar sind.

9. Verdeckgestell nach Anspruch 8, **dadurch gekennzeichnet, dass** die Faltmittel (9) zum Aufrichten eine Schwenkbewegung innerhalb der gekrümmten Führung (62a) ausführen können.

10. Verdeckgestell nach Anspruch 8 oder 9, **dadurch gekennzeichnet, dass** die gekrümmte Führung (62a) einen Kreisbogenabschnitt aufweist, der mit konstantem Radius um eine Mittenachse (62b) verläuft.

11. Verdeckgestell nach einem der Ansprüche 1 bis 10, **dadurch gekennzeichnet, dass** die Faltmittel (9) einen gekrümmten Endbereich (91) mit einer kederartigen Verdickung (91a) aufweisen, der in die Führung (62a) einsetzbar ist.

12. Verdeckgestell nach einem der Ansprüche 1 bis 11, **dadurch gekennzeichnet, dass** jeder Schlitten (6; 6'; 6") jeweils zwei gegenüberliegende Führungen (62a) aufweist.

13. Verdeckgestell nach einem der Ansprüche 1 bis 12, **dadurch gekennzeichnet, dass** der Schlitten (6; 6'; 6") aus Kunststoff ausgebildet ist.

14. Verdeckgestell nach einem der Ansprüche 1 bis 13, **dadurch gekennzeichnet, dass** an dem Schlitten (6; 6'; 6") horizontal gelagerte Tragrollen (71) und wenigstens eine vertikal gelagerte Führungsrolle (72) vorgesehen sind.

15. Verdeckgestell nach Anspruch 14, **dadurch gekennzeichnet, dass** die obere Stirnseite der wenigstens einen Führungsrolle (72) niedriger liegt als der obere Rand der Trag rollen (71 ).

16. Verdeckgestell nach Anspruch 15, **dadurch gekennzeichnet, dass** die untere Stirnseite der wenigstens einen Führungsrolle (72) in einer Ebene oberhalb der Drehachse der Tragrollen (71) liegt.

17. Verdeckgestell nach Anspruch 15 oder 16, **dadurch gekennzeichnet, dass** die Drehachse jeweils einer Tragrolle (71) zugleich diejenige Achse (62b) ist, um die die Faltmittel (9) zum Aufrichten eine Schwenkbewegung ausführen.

18. Verdeckgestell nach einem der Ansprüche 1 bis 17, **dadurch gekennzeichnet, dass** an dem Schlitten (6; 6'; 6") ein in den Längsträger (4; 4'; 4") hineinragender Fortsatz (73) als Kippsicherung vorgesehen ist.

19. Verdeckgestell nach Anspruch 18, **dadurch gekennzeichnet, dass** der Fortsatz (73) in eine C-förmige Kammer (42) des Längsträgers (4; 4'; 4") vorsteht, deren oberer Schenkel ein Ausheben verhindert.

20. Verdeckgestell nach Anspruch 18 oder 19 und einem der Ansprüche 14 bis 17, **dadurch gekennzeichnet, dass** der Fortsatz (73) als über die nach außen weisende Stirnseite der Tragrollen (71) vorstehender, mit dem Schlitten (6; 6'; 6") einstückig ausgebildeter Abschnitt ausgebildet ist..

21. Verdeckgestell nach Ansprüche 19 und 20, **dadurch gekennzeichnet, dass** die Tragrollen (71) auf einer ersten Bahn (41) des Längsträgers (4; 4") abrollen.

22. Verdeckgestell nach Anspruch 20 oder 21, **dadurch gekennzeichnet, dass** der Fortsatz (73) zwischen den beiden Tragrollen (71) angeordnet ist.

23. Verdeckgestell nach einem der Ansprüche 1 bis 22, **dadurch gekennzeichnet, dass** Rastmittel (91c) vorgesehen sind, die ein Herausgleiten der Faltmittel (9; 9") aus der Führung (62a) verhindern.

24. Verdeckgestell nach Anspruch 23, **dadurch gekennzeichnet, dass** die Rastmittel als in Verriegelungsrichtung vorgespannte Abstellung (91c) an einem in der Führung (62a) aufgenommenen Abschnitt (91a) der Faltmittel (9; 9") ausgebildet sind, wobei die Abstellung (91c) eine Fläche des die Führung (62a) definierenden Bauteils (620) hintergreift.

25. Verdeckgestell nach einem der Ansprüche 1 bis 24, **dadurch gekennzeichnet, dass** die Faltmittel (9; 9") beim Hochschwenken auch eine von der Längsthalbierenden des Planenaufbaus fort weisende Bewegungskomponente aufweisen.

26. Verdeckgestell nach einem der Ansprüche 1 bis 25, **dadurch gekennzeichnet, dass** die Faltmittel (9; 9") ein mittleres Hubglied (92) aufweisen, welches vorzgsweise über eine Soll-Biegelinie mit äußeren Faltmittelabschnitten (93) verbunden ist und beim Zusammenschieben der Spriegel (8) eine Anlagefläche zum Anheben einer Dachplane (5) bildet.

27. Verdeckgestell nach Anspruch 26, **dadurch gekennzeichnet, dass** das mittlere Hubglied (92) oberhalb der Längsträger (4; 4'; 4") ablegbar ist.

28. Verdeckgestell nach einem der Ansprüche 1 bis 27, **dadurch gekennzeichnet, dass** die Führung (62a) unterhalb des oberen Randes des Längsträgers (4; 4'; 4") angeordnet ist.

29. Verdeckgestell nach Anspruch 18 oder 19, **dadurch gekennzeichnet, dass** der Fortsatz (73) über die nach außen weisende Stirnseite eines Tragelementes (71) vorsteht.

30. Verdeckgestell nach Anspruch 29, **dadurch gekennzeichnet, dass** der Fortsatz (73) als Verlängerung der Tragelemente (71) ausgebildet ist.

31. Verdeckgestell nach einem der Ansprüche 1 bis 30, **dadurch gekennzeichnet, dass** jeder der Längsträger (4; 4'; 4") einen ersten, im wesentlichen horizontal angeordneten Schenkel (4a), und einen weiteren, im wesentlichen vertikal nach unten angeordneten Schenkel (4b) umfasst, und dass der erste Schenkel (4a) eine zu der Längshalbierenden des Planenaufbaus weisende Gleitbahn (41) für ein Tragelement (71) aufweist, und dass neben der Gleitbahn (41) ein C-förmiger, zur Gleitbahn (41) offener Profilabschnitt (42) vorgesehen ist.

32. Verdeckgestell nach Anspruch 31, **dadurch gekennzeichnet, dass** der Boden des C-förmigen Profilabschnitts (42) gegenüber der Gleitbahn (41) erhöht ausgebildet ist.

33. Verdeckgestell nach Anspruch 31 oder 32, **dadurch gekennzeichnet, dass** auf der der Gleitbahn (41) abgekehrten Seite des C-förmigen Profilabschnitts (42) eine nach oben offene Kammer (44) gebildet ist, in die ein vertikales Führungselement (72) einsetzbar ist.

34. Verdeckgestell nach Anspruch 33, **dadurch gekennzeichnet, dass** der Grund der nach oben offenen Kammer (44) unterhalb einer Halbierenden des C-förmigen Profilabschnitts (42) liegt.

35. Verdeckgestell nach Anspruch 33 oder 34, **dadurch gekennzeichnet, dass** der untere Rand des oberen, im wesentlichen horizontalen Schenkels des C-förmigen Profilabschnitts (42) oberhalb einer die nach oben offenen Kammer (44) Halbierenden liegt.

36. Verdeckgestell nach einem der Ansprüche 33 bis 35, **dadurch gekennzeichnet, dass** eine obere Begrenzung (45) des ersten Schenkels (4a) zwischen der nach oben offenen Kammer (44) und einem von der Längsthalbierenden des Planenaufbaus fort weisenden äußeren Rand nach unten abfallend ausgebildet ist.

37. Verdeckgestell nach Anspruch 36, **dadurch gekennzeichnet, dass** unterhalb des nach unten abfallenden Bereichs (45) wenigstens eine geschlossene Hohlkammer (46) gebildet ist.

38. Verdeckgestell nach einem der Ansprüche 31 bis 37, **dadurch gekennzeichnet, dass** der weitere Schenkel (4b) eine Aufnahme für ein Tragglied einer Seitenplane oder eine Anlagefläche für eine Mittelrunge (2) aufweist.

39. Verdeckgestell nach einem der Ansprüche 31 bis 38, **dadurch gekennzeichnet, dass** der Längsträger (4) aus einem stranggepressten Aluminium oder Stahl besteht.

## Claims

1. A covering frame for a tarpaulin structure, comprising a plurality of bows (8) which can be moved along lateral longitudinal members (4; 4'; 4") and which respectively have at their two ends a sliding carriage (6; 6'; 6"), with folding means (9; 9") being provided in the region of the sliding carriages (6; 6'; 6") for positive folding of a tarpaulin (5), wherein two adjacent carriages (6; 6', 6") respectively comprise a guide (62a), into which guides (62a) of the two adjacent carriages (6; 6', 6") a folding means (9, 9") is inserted,
**characterized in**
**that** each of the folding means (9; 9") has a thickening (91 a),
**that** the folding means (9; 9") protrudes radially from the thickening (91 a),
**that** the guide (62a) has an aperture (620a) for the passage of an end portion (91) of the folding means (9"), and
**that** the thickening (91 a) can be inserted from one end along its axis into the guide (62a) together with the folding means (9; 9").

2. The covering frame as claimed in claim 1, **characterized in that** the guide (62a) has a thrust bearing (621) in a wall of the sliding carriage (6"), which thrust bearing (621) is closed at least in the upward direction.

3. The covering frame as claimed in claim 1 or 2, **characterized in that** the sliding carriage (6") has a rest face (625) which prevents the folding means (9") from pivoting below the horizontal.

4. The covering frame as claimed in one of claims 1 to 3, **characterized in that** the folding means (9") have at least one cutout (93a).

5. The covering frame as claimed in one of claims 1 to 4, **characterized in that** the guide (62a) is limited by at least one claw-like receptacle (620), and that the claw-like receptacle (620) comprises the aperture (620a) for the passage of an end portion (91) of the folding means (9").

6. The covering frame as claimed in one of claims 1 to 5, **characterized in that** the guide (62a) has a substantially cylindrical shape, that the thickening is embodied as journal (91 a), and that an end portion (91), which is held in the guide, of the folding means (9") is rotatable in the guide (62a) and defines a pivot axis.

7. The covering frame as claimed in one of claims 1 to 6, **characterized in that** the aperture (620a) has a width which is adapted to the thickness of the folding means (9") close to the end portion (91) of the folding means (9").

8. The covering frame as claimed in one of claims 1 to 4, **characterized in that** the folding means (9) can be inserted at the end side in a curved guide (62a) of the sliding carriage (6; 6").

9. The covering frame as claimed in claim 8, **characterized in that** the folding means (9) can perform a pivoting movement within the curved guide (62a) in order to be set upright.

10. The covering frame as claimed in claim 8 or 9, **characterized in that** the curved guide (62a) has a circular-arc section which runs with a constant radius about a central axis (62b).

11. The covering frame as claimed in one of claims 1 to 10, **characterized in that** the folding means (9) have a curved end region (91) with a bead-like thickening (91a) which can be inserted into the guide (62a).

12. The covering frame as claimed in one of claims 1 to 11, **characterized in that** each sliding carriage (6; 6'; 6") respectively has two oppositely-situated guides (62a).

13. The covering frame as claimed in one of claims 1 to 12, **characterized in that** the sliding carriage (6; 6'; 6") is formed from plastic.

14. The covering frame as claimed in one of claims 1 to 13, **characterized in that** horizontally-mounted load-bearing rollers (71) and at least one vertically-mounted guide roller (72) are provided on the sliding carriage (6; 6'; 6").

15. The covering frame as claimed in claim 14, **characterized in that** the upper end side of the at least one guide roller (72) is situated lower than the upper edge of the load-bearing rollers (71).

16. The covering frame as claimed in claim 15, **characterized in that** the lower end side of the at least one guide roller (72) is situated in a plane above the rotational axis of the load-bearing rollers (71).

17. The covering frame as claimed in claim 15 or 16, **characterized in that** the rotational axis of a respective load-bearing roller (71) is at the same time that axis (62b) about which the folding means (9) perform a pivoting movement in order to be set upright.

18. The covering frame as claimed in one of claims 1 to 17, **characterized in that** a projection (73) which projects into the longitudinal members (4; 4'; 4") is provided on the sliding carriage (6; 6'; 6") as an anti-tilt device.

19. The covering frame as claimed in claim 18, **characterized in that** the projection (73) projects into a C-shaped chamber (42) of the longitudinal member (4; 4'; 4"), the upper limb of which chamber (42) prevents said projection (73) from being lifted out.

20. The covering frame as claimed in claim 18 or 19 and one of claims 14 to 17, **characterized in that** the projection (73) is formed by means of the portion which projects beyond the outwardly-pointing end side of the load-bearing rollers (71) and is formed in one piece with the sliding carriage (6; 6'; 6").

21. The covering frame as claimed in claims 19 and 20, **characterized in that** the load-bearing rollers (71) roll on a first track (41) of the longitudinal member (4; 4").

22. The covering frame as claimed in claim 20 or 21, **characterized in that** the projection (73) is arranged between the two load-bearing rollers (71).

23. The covering frame as claimed in one of claims 1 to 22, **characterized in that** latching means (91c) are provided which prevent the folding means (9; 9") from sliding out of the guide (62a).

24. The covering frame as claimed in claim 23, **characterized in that** the latching means are formed as bent-out portion (91 c), preloaded in a locking direction, of a portion (91a) of the folding means (9; 9") which is held in the guide (62a), wherein the bent-out portion (91 c) engages behind a face of the component (620) which defines the guide (62a).

25. The covering frame as claimed in one of claims 1 to 24, **characterized in that** the folding means (9; 9"), as they are pivoted up, also have movement component facing away from the longitudinal bisector of the tarpaulin structure.

26. The covering frame as claimed in one of claims 1 to 25, **characterized in that** the folding means (9; 9") have a central lifting member (92) which is preferably connected to outer folding means sections (93) by means of a predetermined bending line and, as the bows (8) are pushed together, forms a contact face for lifting a roof tarpaulin (5).

27. The covering frame as claimed in claim 26, **characterized in that** the central lifting member (92) can be disposed above the longitudinal members (4; 4'; 4").

28. The covering frame as claimed in one of claims 1 to 27, **characterized in that** the guide (62a) is arranged below the upper edge of the longitudinal member (4; 4'; 4").

29. The covering frame as claimed in claim 18 or 19, **characterized in that** the projection (73) projects beyond the outwardly-pointing end side of a load-bearing element (71).

30. The covering frame as claimed in claim 29, **characterized in that** the projection (73) is formed as an elongation of the load-bearing elements (71).

31. The covering frame as claimed in one of claims 1 to 30, **characterized in that** each of the longitudinal members (4; 4'; 4") comprises a first, substantially horizontally arranged limb (4a), and a further limb (4b) which is arranged substantially vertically downward, and that the first limb (4a) has a sliding track (41) pointing to the longitudinal bisector of the tarpaulin structure for a load-bearing element (71), and that a C-shaped profile section (42) which is open toward the sliding track (41) is provided adjacent to the sliding track (41).

32. The covering frame profile as claimed in claim 31, **characterized in that** the base of the C-shaped profile section (42) is formed so as to be elevated in relation to the sliding track (41).

33. The covering frame profile as claimed in claim 31 or 32, **characterized in that** an upwardly-open chamber (44) is formed on that side of the C-shaped profile section (42) which faces away from the sliding track (41), in which chamber (44) can be inserted a vertical guide element (72).

34. The covering frame profile as claimed in claim 33, **characterized in that** the base of the upwardly-open chamber (44) is situated below a bisector of the C-shaped profile section (42).

35. The covering frame profile as claimed in claim 33 or 34, **characterized in that** the lower edge of the upper, substantially horizontal limb of the C-shaped profile section (42) is situated above a bisector of the upwardly-open chamber (44).

36. The covering frame profile as claimed in one of claims 33 to 35, **characterized in that** an upper delimitation (45) of the first limb (4a) is formed so as to slope downward between the upwardly-open chamber (44) and an outer edge facing away from the longitudinal bisector of the tarpaulin structure.

37. The covering frame profile as claimed in claim 36, **characterized in that** at least one closed hollow chamber (46) is formed below the downward-sloping region (45).

38. The covering frame profile as claimed in one of claims 31 to 37, **characterized in that** the further limb (4b) has a receptacle for a load-bearing element of a side tarpaulin or a contact face for a central stanchion (2).

39. The covering frame profile as claimed in one of claims 31 to 38, **characterized in that** the longitudinal member (4) is composed of extruded aluminum or steel.

## Revendications

1. Structure de couverture pour une superstructure bâchée, comprenant une pluralité d'arceaux (8) pouvant être déplacés le long de longerons (4 ; 4' ; 4") latéraux, lesdits arceaux comportant un coulisseau (6 ; 6' ; 6") à chacune de leurs deux extrémités, des moyens de pliage (9 ; 9") étant prévus dans la zone du coulisseau (6 ; 6' ; 6") pour le pliage contraint d'une bâche (5), deux coulisseaux (6 ; 6' ; 6") voisins comportant respectivement un guide (62a), les moyens de pliage (9 ; 9") étant insérés dans les guides (62a) des deux coulisseaux voisins (6 ; 6' ; 6"),
**caractérisée en ce**
**que** chacun des moyens de pliage (9 ; 9") comporte un renflement (91 a), que les moyens de pliage (9 ; 9") s'étendent radialement à partir du renflement (91 a),
**que** le guide (62a) comporte un jour (620a) pour le passage d'un segment terminal (91) du moyen de pliage (9"), et
**que** le renflement (91 a) peut être inséré depuis un côté et le long de son axe dans le guide (62a) conjointement avec les moyens de pliage (9 ; 9").

2. Structure de couverture selon la revendication 1, **caractérisée en ce que** le guide (62a) comporte un contre-palier (621) dans une paroi du coulisseau (6"), ledit contre-palier étant au moins fermé vers le haut.

3. Structure de couverture selon la revendication 1 ou 2, **caractérisée en ce que** le coulisseau (6") comporte une surface d'appui (625) qui empêche les moyens de pliage (9") de pivoter en dessous de l'horizontale.

4. Structure de couverture selon l'une des revendications 1 à 3, **caractérisée en ce que** les moyens de pliage (9") comportent au moins un évidement (93a).

5. Structure de couverture selon l'une des revendications 1 à 4, **caractérisée en ce que** le guide (62a) est limité par au moins un espace de logement (620) de type à mâchoire, et que l'espace de logement (620) de type à mâchoire comporte le jour (620a) pour le passage d'un segment terminal (91) des moyens de pliage (9").

6. Structure de couverture selon l'une des revendications 1 à 5, **caractérisée en ce que** le guide (62a) comporte une forme essentiellement cylindrique, que le renflement a la forme d'un tenon (91 a), et qu'un segment terminal (91) des moyens de pliage (9") maintenu dans le guide pouvant effectuer une rotation dans le guide (62a) définit un axe de pivotement.

7. Structure de couverture selon l'une des revendications 1 à 6, **caractérisée en ce que** le jour (620a) présente une largeur adaptée à l'épaisseur des moyens de pliage (9") à proximité du segment terminal (91) des moyens de pliage (9").

8. Structure de couverture selon l'une des revendications 1 à 4, **caractérisée en ce que** les moyens de pliage (9) peuvent être insérés à leurs extrémités dans un guide (62a) incurvé du coulisseau (6 ; 6').

9. Structure de couverture selon la revendication 8, **caractérisée en ce que** les moyens de pliage (9), pour être relevés, peuvent effectuer un mouvement de pivotement à l'intérieur du guide (62a) incurvé.

10. Structure de couverture selon la revendication 8 ou 9, **caractérisée en ce que** le guide (62a) incurvé comporte un segment d'arc de cercle qui s'étend à rayon constant autour d'un axe central (62b).

11. Structure de couverture selon l'une des revendications 1 à 10, **caractérisée en ce que** les moyens de pliage (9) comportent une zone d'extrémité (91) incurvée dotée d'un renflement (91 a) de type bourrelet pouvant être inséré dans le guide (62a).

12. Structure de couverture selon l'une des revendications 1 à 11, **caractérisée en ce que** chaque coulisseau (6 ; 6' ; 6") comporte respectivement deux guides (62a) opposés.

13. Structure de couverture selon l'une des revendications 1 à 12, **caractérisée en ce que** le coulisseau (6 ; 6' ; 6") est réalisé en matière plastique.

14. Structure de couverture selon l'une des revendications 1 à 13, **caractérisée en ce que** le coulisseau (6 ; 6' ; 6") comprend des rouleaux de support (71) montés en palier horizontal et au moins un rouleau de guidage (72) monté en palier vertical .

15. Structure de couverture selon la revendication 14, **caractérisée en ce que** la face frontale supérieure de l'au moins un rouleau de guidage (72) se situe plus bas que le bord supérieur des rouleaux de support (71).

16. Structure de couverture selon la revendication 15, **caractérisée en ce que** la face frontale inférieure de l'au moins un rouleau de guidage (72) repose dans un plan situé au-dessus de l'axe de rotation des rouleaux de support (71).

17. Structure de couverture selon la revendication 15 ou 16, **caractérisée en ce que** l'axe de rotation de chacun des rouleaux de support (71) sert en même temps d'axe (62b) autour duquel les moyens de pliage (9) effectuent un mouvement de pivotement pour se relever.

18. Structure de couverture selon l'une des revendications 1 à 17, **caractérisée en ce que** le coulisseau comprend un prolongement (73) saillant dans le longeron (4 ; 4' ; 4") comme anti-basculant.

19. Structure de couverture selon la revendication 18, **caractérisée en ce que** le prolongement (73) fait saillie dans une cavité (42) en C du longeron (4 ; 4' ; 4") dont la branche supérieure empêche tout soulèvement.

20. Structure de couverture selon la revendication 18 ou 19 et l'une des revendications 14 à 17, **caractérisée en ce que** le prolongement (73) est conformé en partie formée d'un seul tenant avec le coulisseau (6 ; 6' ; 6") et s'étendant au-delà de la face frontale orientée vers l'extérieur des rouleaux de support (71).

21. Structure de couverture selon les revendications 19 et 20, **caractérisée en ce que** les rouleaux de support (71) roulent sur un premier rail (41) du longeron (4 ; 4").

22. Structure de couverture selon la revendication 20 ou 21, **caractérisée en ce que** le prolongement (73) est disposé entre les deux rouleaux de support (71).

23. Structure de couverture selon l'une des revendications 1 à 22, **caractérisée en ce que** des moyens d'enclenchement (91c) sont prévus afin d'empêcher les moyens de pliage (9 ; 9") de glisser hors du guide (62a).

24. Structure de couverture selon la revendication 23, **caractérisée en ce que** les moyens d'enclenchement sont conformés en élément d'arrêt (91c) précontraint en direction de verrouillage à partir d'un segment (91 a) des moyens de pliage (9 ; 9") logé dans le guide (62a), l'élément d'arrêt (91c) s'engrenant derrière une surface de l'élément (620) définissant le guide (62a).

25. Structure de couverture selon l'une quelconque des revendications 1 à 24, **caractérisée en ce qu'** en cas de pivotement vers le haut, les moyens de pliage (9 ; 9") comportent aussi un composant de mouvement s'éloignant de la médiane longitudinale de la superstructure bâchée.

26. Structure de couverture selon l'une des revendications 1 à 25, **caractérisée en ce que** les moyens de pliage (9 ; 9") comportent un élément de levage (92) central, lequel est de préférence relié par une ligne de flexion théorique à des segments de moyens de pliage (93) extérieurs, et lequel forme une surface d'appui pour soulever un toit (5) en bâche en cas de rapprochement des arceaux (8).

27. Structure de couverture selon la revendication 26, **caractérisée en ce que** l'élément de levage (92) central peut être déposé au-dessus des longerons (4 ; 4' ; 4").

28. Structure de couverture selon l'une des revendications 1 à 27, **caractérisée en ce que** le guide (62a) est disposé en dessous du bord supérieur du longeron (4 ; 4' ; 4").

29. Structure de couverture selon la revendication 18 ou 19, **caractérisée en ce que** le prolongement (73) fait saillie au-delà de la face frontale orientée vers l'extérieur d'un élément de support (71).

30. Structure de couverture selon la revendication 29, **caractérisée en ce que** le prolongement (73) est conformé en prolongation de l'élément de support (71).

31. Structure de couverture selon l'une des revendications 1 à 30, **caractérisée en ce que** chacun des longerons (4 ; 4' ; 4") comprend une première branche (4a) disposée pour l'essentiel horizontalement et une autre branche (4b) disposée pour l'essentiel verticalement vers le bas, et que la première branche (4a) comporte un rail de glissement (41) pour un élément de support (71) orienté vers la médiane longitudinale de la construction bâchée, et qu'un segment profilé (42) en C ouvert en direction du rail de glissement (41) est prévu à proximité du rail de glissement (41).

32. Structure de couverture selon la revendication 31, **caractérisée en ce que** le fond du segment profilé (42) en C est surélevé par rapport au rail de glissement (41).

33. Structure de couverture selon la revendication 31 ou 32, **caractérisée en ce qu'**une cavité (44) ouverte vers le haut est formée du côté du segment profilé (42) en C opposé au rail de glissement (41), un élément de guidage (72) vertical pouvant être inséré dans ladite cavité.

34. Structure de couverture selon la revendication 33, **caractérisée en ce que** le fond de la cavité (44) ouverte vers le haut se situe en dessous d'une médiane du segment profilé (42) en C.

35. Structure de couverture selon la revendication 33 ou 34, **caractérisée en ce que** le bord inférieur de la branche supérieure essentiellement horizontale du segment profilé (42) en C se situe au-dessus d'une médiane de la cavité (44) ouverte vers le haut.

36. Structure de couverture selon l'une des revendications 33 à 35, **caractérisée en ce qu'**une délimitation (45) supérieure de la première branche (4a) située entre la cavité (44) ouverte vers le haut et un bord extérieur externe de la médiane longitudinale de la construction bâchée est réalisée s'inclinant vers le bas.

37. Structure de couverture selon la revendication 36, **caractérisée en ce qu'**au moins une cavité creuse (46) fermée est formée en dessous de la zone (45) inclinée vers le bas.

38. Structure de couverture selon l'une des revendications 31 à 37, **caractérisée en ce que** l'autre branche (4b) comporte un espace de logement pour un élément de support d'une bâche latérale ou une surface d'appui pour une colonne centrale (2).

39. Structure de couverture selon l'une des revendications 31 à 38, **caractérisée en ce que** le longeron (4) est réalisé en aluminium ou acier extrudé.
